# EUROPEAN PATENT APPLICATION

(11) **EP 4 596 323 A1**
(43) Date of publication of application: **06.08.2025**
(21) Application number: 23871743.3
(22) Date of filing: 01.09.2023
(51) Int. Cl.: B60Q 1/04, B60Q 1/14, F21Y 105/14, F21Y 115/10, F21V 7/00, F21V 14/04, F21S 41/143, F21S 41/153, F21S 41/663, F21W 102/14, F21W 102/155, F21W 102/16

(54) **VEHICLE HEADLIGHT**

(30) Priority: 30.09.2022 JP 2022158864; 04.11.2022 JP 2022177540
(71) Applicant: Koito Manufacturing Co., Ltd., Shinagawa-ku, Tokyo 141-0001 (JP)
(72) Inventor: MANO Mitsuharu, Shizuoka-shi, Shizuoka 424-8764 (JP); WAKASUGI Tomoki, Shizuoka-shi, Shizuoka 424-8764 (JP)
(74) Representative: Hoffmann Eitle
(86) International application number: PCT/JP2023/032107
(87) International publication number: WO 2024/070503

(57) **Abstract**

A vehicle headlight (1) includes an image generation unit (20), a light source unit (12), and a memory (ME) that stores an additional light distribution image (36) and a dimming rate distribution (30), in which the dimming rate distribution (30) includes a dimming section (31) having a dimming rate of a predetermined value or more and a gradient section (32) along at least a part of an edge of the dimming section (31), and the image generation unit (20) enlarges or reduces at least a part of the dimming rate distribution (30) while maintaining a state in which the gradient section (32) is along the edge of the dimming section (31), superimposes the dimming rate distribution (30) on a part of the additional light distribution image (36) to decrease the brightness of the part of the additional light distribution image (36), and generates an image in which light emitted from a light source unit (12) forms an ADB light distribution pattern (PA) in which a dimming region (91) superimposed on a predetermined object and having a decreased light amount and a gradient region (92) in which a light amount is decreased along an edge of the dimming region (91) are formed in an additional light distribution pattern (PAH).

## Description

### Technical Field

The present invention relates to a vehicle headlight.

### Background Art

As a vehicle headlight typified by an automotive headlight, a vehicle headlight that changes a light distribution pattern of emitted light is known, and Patent Literature 1 below discloses such a vehicle headlight.

The vehicle headlight described in Patent Literature 1 below is provided with a light distribution pattern forming unit including a micro light emitting diode (LED) array and a memory. The light distribution pattern forming unit can form a light distribution pattern corresponding to a light amount of light emitted from each micro LED by adjusting the light amount of light emitted from each micro LED. The memory stores a table in which information on the light amount of the light emitted from each micro LED is associated with a steering angle of a vehicle. In the vehicle headlight of Patent Literature 1 below, the light distribution pattern forming unit changes the light amount of light emitted from the micro LEDs on the basis of the information stored in the memory, thereby changing the light distribution pattern of the light to be emitted to a light distribution pattern according to the steering angle of the vehicle.

[Patent Literature 1] WO 2021/182151 A1

### Summary of Invention

A vehicle headlight according to a first aspect of the present invention includes: an image generation unit that receives a signal from a detection device detecting a predetermined object positioned in front of a vehicle, and generates an image representing a light distribution pattern including a reference light distribution pattern that is a light distribution pattern including at least a part of a low beam or at least a part of a high beam; a light source unit that includes a plurality of light-emitting units capable of individually changing a light amount of light to be emitted and having an arrangement in a matrix, and that emits light on a basis of the image generated by the image generation unit; and a memory that stores a reference image in which the light emitted from the light source unit forms the reference light distribution pattern, and a dimming rate distribution that is a dimming rate distribution superimposed on a part of the reference image and decreasing a brightness of the part, in which the dimming rate distribution includes a dimming section that has a dimming rate of a predetermined value or more and a gradient section that is along at least a part of an edge of the dimming section and has a dimming rate of the predetermined value or less, the dimming rate decreasing from a dimming section side toward an opposite side to the dimming section, and the image generation unit enlarges or reduces at least a part of the dimming rate distribution while maintaining a state in which the gradient section is along the edge of the dimming section, superimposes the dimming rate distribution on a part of the reference image to decrease the brightness of the part of the reference image, and generates the image in which the light emitted from the light source unit forms a specific light distribution pattern in which a dimming region corresponding to the dimming section, superimposed on the predetermined object, and having a decreased light amount, and a gradient region corresponding to the gradient section, where a light amount is decreased along an edge of the dimming region, are formed in the reference light distribution pattern.

In this vehicle headlight of the first aspect, in a case where the predetermined object is positioned in front of the vehicle, the dimming region corresponding to the dimming section of the dimming rate distribution and superimposed on the predetermined object, where the light amount is decreased, and the gradient region corresponding to the gradient section of the dimming rate distribution and being along the edges of the dimming region are formed in the reference light distribution pattern. Therefore, the light amount of the light emitted to the predetermined object is decreased. In addition, the dimming rate of the gradient section corresponding to the gradient region is equal to or less than a predetermined value, and is decreased from the dimming section side toward the opposite side to the dimming section. Therefore, the gradient region can be brighter than the dimming region, and the brightness of the gradient region can be decreased from the opposite side to the dimming region toward the dimming region. Therefore, as compared with a case where the gradient region is not formed, the distinct visibility of the edges of the dimming region can be reduced, and the movement of the dimming region can be controlled to minimize discomfort for the driver of the vehicle. In addition, in this vehicle headlight, the image generation unit enlarges or reduces at least a part of the dimming rate distribution while maintaining the state in which the gradient section is along the edges of the dimming section, and superimposes the dimming rate distribution on a part of the reference image to lower the brightness of the part of the reference image, thereby generating an image representing a specific light distribution pattern. Therefore, according to this vehicle headlight, even though the information stored in the memory includes the reference image and the dimming rate distribution, it is possible to change the positions and sizes of the dimming region and the gradient region. Therefore, according to this vehicle headlight, an increase in the amount of information stored in the memory can be suppressed as compared with a case where a plurality of images representing the specific light distribution patterns in which the positions and sizes of the dimming region and the gradient region are changed are stored in the memory.

In the vehicle headlight according to the first aspect, a shape of the dimming section may be a quadrangle, and the gradient section may include a pair of side gradient sections that are along left and right edges of the dimming section, respectively.

The predetermined object in the field of view of the driver of the vehicle tends to move in the lateral direction, and the dimming region also tends to move in the lateral direction. In this vehicle headlight of the first aspect, the gradient region in the specific light distribution pattern includes a pair of regions that are along the left and right edges of the dimming region, respectively, and the distinct visibility of the left and right edges of the dimming region can be reduced. Therefore, according to this vehicle headlight, as compared with a case where the gradient region does not include the pair of regions that are along the left and right edges of the dimming region, respectively, the movement of the dimming region can be controlled to minimize discomfort for the driver of the vehicle.

Alternatively, a shape of the dimming section may be a quadrangle, and the gradient section may include an upper gradient section that is along an upper edge of the dimming section and a lower gradient section that is along a lower edge of the dimming section.

The vehicle vibrates in a case of traveling on an uneven road such as a gravel road, and the dimming region also moves in the vertical direction according to the vibration. In this vehicle headlight of the first aspect, the gradient region in the specific light distribution pattern includes a pair of regions that are along the upper and lower edges of the dimming region, respectively, and the distinct visibility of the upper and lower edges of the dimming region can be reduced. Therefore, according to this vehicle headlight, as compared with a case where the gradient region does not include the pair of regions that are along the upper and lower edges of the dimming region, respectively, the movement of the dimming region can be controlled to minimize discomfort when the vehicle travels on the uneven road.

Alternatively, a shape of the dimming section may be a polygon, the gradient section may include a plurality of trapezoidal reference gradient sections, each having one base line along each side of edges of the dimming section, and the reference gradient sections adjacent to each other may share a lateral side.

In this vehicle headlight of the first aspect, the gradient region in the specific light distribution pattern surrounds the dimming region along all the edges of the polygonal dimming region. For example, in a case where the gradient section includes a plurality of rectangular reference gradient sections, each having one side along each side of the edges of the dimming section, the gradient region is not formed in the vicinity of the apex of the polygonal dimming region. Therefore, according to this vehicle headlight, it can be controlled to minimize uncomfortable for the driver of the vehicle as compared with such a case.

In the vehicle headlight of the first aspect, the shape of the dimming section may be a trapezoid, an upper base of which is longer than a lower base.

A visibility section for the driver of the oncoming vehicle to visually recognize the outside of the vehicle is, for example, a windshield, and a visibility section for the driver of the preceding vehicle to visually recognize the outside of the vehicle is, for example, a side mirror, a rear window, an imaging device that images the rear of the vehicle, or the like. Such a visibility section tends to be positioned on the upper side of the oncoming vehicle and the preceding vehicle. In addition, in a case where the dimming region in the specific light distribution pattern is wider, the visibility of the front is reduced. In the vehicle headlight of the first aspect, since the shape of the dimming region is a trapezoid, the upper base of which is longer than the lower base, it is easy to allow the dimming region to be superimposed on the visibility section as compared with a case where the shape of the dimming region is a trapezoid, the upper base of which is shorter than the lower base. Therefore, according to this vehicle headlight, it is easy to reduce glare to the driver of the oncoming vehicle or the preceding vehicle as compared with the above-described case.

Alternatively, the dimming rate distribution may include three or more triangular reference sections that share one apex, the reference sections adjacent to each other may share a side extending from the apex, and a part of each reference section, which includes the apex, may be a part of the dimming section, and another part of each reference section may be a part of the gradient section.

Alternatively, a shape of the dimming section may be circular, and the gradient section may be along an entire circumference of an edge of the dimming section.

As described above, according to the vehicle headlight of the first aspect of the present invention, it is possible to provide the vehicle headlight capable of controlling the movement of the darkened region to minimize discomfort for the driver while suppressing the increase in the amount of information.

A vehicle headlight according to a second aspect of the present invention includes: a light source unit that includes a plurality of light-emitting units emitting light by electric power, capable of individually changing a light amount of light to be emitted, and having an arrangement in a matrix, and that emits light with a light distribution pattern corresponding to a light amount of light emitted from the plurality of light-emitting units; and a control unit that receives a signal from a detection device detecting a predetermined object positioned in front of a vehicle and that controls the light source unit, in which the control unit controls the light source unit such that, in a predetermined light distribution pattern, a light amount of a first region superimposed on at least a part of the predetermined object is decreased, and a light amount of a second region including a hot zone of the predetermined light distribution pattern is increased.

In this vehicle headlight of the second aspect, in a case where the predetermined object is positioned in front of the vehicle, the light amount of the first region superimposed on at least a part of the predetermined object in the predetermined light distribution pattern is decreased. Therefore, according to this vehicle headlight, the light amount of the light emitted to the predetermined object is decreased. Since the light amount of the first region is decreased, the power consumption is reduced, and surplus power is generated. In this vehicle headlight, in a case where surplus power is generated as described above, the light amount of the second region including the hot zone is increased. Therefore, according to this vehicle headlight, it is possible to improve the visibility of the region including the hot zone by effectively utilizing electric power without reaching the upper limit of the power consumption.

In the vehicle headlight of the second aspect, the control unit may control the light source unit such that the light amount of the second region is increased with an elapse of time to reach a predetermined amount.

With such a configuration, it can be controlled to minimize uncomfortable for the driver due to the brightening of the second region as compared with a case where the light amount in the second region instantaneously reaches the predetermined amount.

In the vehicle headlight of the second aspect, the control unit may control the light source unit such that a brightening amount is increased at a position in the second region as the light amount at the position is greater.

With such a configuration, it can be controlled to minimize uncomfortable for the driver due to the brightening of the second region as compared with a case where the brightening amount at any position in the second region is constant.

In the vehicle headlight of the second aspect, the control unit may control the light source unit such that a brightening rate is increased at a position in the second region as the light amount at the position is greater.

With such a configuration, it can be controlled to minimize uncomfortable for the driver due to the brightening of the second region as compared with a case where the brightening rate at any position in the second region is constant.

In the vehicle headlight of the second aspect, the second region may be a region in which a light amount is a threshold value or more, and the control unit may control the light source unit such that a brightening amount at any position in the second region is a value obtained by subtracting the threshold value from a light amount at the any position and increasing the light amount by a predetermined magnification.

In this vehicle headlight of the second aspect, the light amount of the outer edge of the second region reaches the above-described threshold value. Therefore, with such a configuration, the brightening amount at the outer edge of the second region is zero, and the noticeability of the boundary of the second region can be minimized as compared with a case where the light amount at the any position is increased by a predetermined magnification.

In this case, the predetermined magnification may be constant, and the predetermined magnification may be increased as the light amount obtained by subtracting the threshold value from the light amount at the any position is increased.

In the former case, the control load of the control unit can be reduced, and in the latter case, it can be controlled to minimize uncomfortable for the driver due to the brightening of the second region.

In the vehicle headlight of the second aspect, the control unit may control the light source unit such that a brightening amount of the second region is increased as a dimming amount in the first region is increased.

The power consumption is decreased as the dimming amount of the first region is increased, and the second region is brightened as the brightening amount of the second region is increased, so that the visibility of the second region tends to be improved. Therefore, according to such a configuration, the visibility of the region including the hot zone can be further improved while an increase in power consumption is suppressed.

In this case, the control unit may control the light source unit such that the second region is wider as a dimming amount of the first region is increased.

With such a configuration, excessive brightening of the second region can be controlled, and it can be controlled to minimize uncomfortable for the driver due to the brightening of the second region.

In the vehicle headlight of the second aspect, in a case where the brightening amount of the second region is increased as the dimming amount of the first region is increased, the control unit may control the light source unit such that the brightening amount of the second region per unit area is increased as the dimming amount of the first region is increased.

With such a configuration, excessive enlargement of the second region can be controlled, and it can be controlled to minimize uncomfortable for the driver due to the brightening of the second region.

In the vehicle headlight of the second aspect, the control unit may control the light source unit such that the light amount at the position where the light amount in the second region is maximum does not exceed the specific value.

According to such a configuration, it is possible to prevent the formation of an excessively bright region in the second region.

In the vehicle headlight of the second aspect, the control unit may control the light source unit such that the dimming amount of the first region and the brightening amount of the second region are the same as each other.

With such a configuration, it is possible to improve the visibility of the region including the hot zone without increasing the power consumption.

The above-described vehicle headlight of the second aspect may further include a memory that stores a reference image representing the predetermined light distribution pattern, a plurality of dimming images that is superimposed on a part of the reference image, differs in at least a part of a region superimposed on the reference image, and is darker than a brightness of the region in the reference image, and a dimming image superimposed on a region corresponding to the second region in the reference image, in which the control unit may include an image generation unit and a light distribution control unit, the image generation unit may superimpose at least one dimming image of the plurality of dimming images on a part of the reference image to decrease a brightness of a region corresponding to the first region in the reference image, superimpose the brightening image in which a brightness is changed on the reference image to increase a brightness of a region corresponding to the second region in the reference image, and generate an image representing a specific light distribution pattern in which the light amount of the first region is decreased and the light amount of the second region is increased in the predetermined light distribution pattern, and the light distribution control unit may control the light source unit on a basis of the image to cause the light source unit to emit light with the specific light distribution pattern.

In this case, the brightening image may be an image representing a region corresponding to the second region in the reference image.

According to such a configuration, the brightening amount can be increased at a position in the second region as the light amount at the position is greater.

The above-described vehicle headlight of the second aspect may further include a memory that stores a reference image representing the predetermined light distribution pattern, a plurality of dimming images that is superimposed on a part of the reference image, differs in at least a part of a region superimposed on the reference image, and is darker than a brightness of the region in the reference image, and a brightening rate distribution superimposed on a region corresponding to the second region in the reference image, the brightening rate distribution being a brightening rate for increasing a brightness of the region, in which the control unit may include an image generation unit and a light distribution control unit, the image generation unit may superimpose at least one dimming image of the plurality of dimming images on a part of the reference image to decrease a brightness of a region corresponding to the first region in the reference image, superimpose the brightening rate distribution in which a brightening rate is changed by a predetermined magnification on a part of the reference image to increase a brightness of a region corresponding to the second region in the reference image, and generate an image representing a specific light distribution pattern in which the light amount of the first region is decreased and the light amount of the second region is increased in the predetermined light distribution pattern, and the light distribution control unit may control the light source unit on a basis of the image to cause the light source unit to emit light with the specific light distribution pattern.

In this case, at a position where a brightness is increased in the region corresponding to the second region in the reference image, the brightening rate of the brightening rate distribution at the position may be increased.

According to such a configuration, the brightening rate can be increased at a position in the second region as the light amount at the position is greater.

As described above, according to the vehicle headlight of the second aspect of the present invention, it is possible to provide the vehicle headlight capable of improving the visibility of the region including the hot zone by effectively utilizing electric power.

### Brief Description of Drawings

[FIG. 1] FIG. 1 is a plan view conceptually illustrating a vehicle including a vehicle headlight according to a first embodiment as a first aspect of the present invention.
[FIG. 2] FIG. 2 is a cross-sectional view schematically illustrating a lamp assembly.
[FIG. 3] FIG. 3 is a front view schematically illustrating a light source unit illustrated in FIG. 2.
[FIG. 4] FIG. 4 is a diagram illustrating a dimming rate distribution according to the first embodiment as the first aspect.
[FIG. 5] FIG. 5 is a diagram illustrating the dimming rate distribution along line V-V in FIG. 4.
[FIG. 6] FIG. 6 is a control flowchart of a control unit according to the first embodiment as the first aspect.
[FIG. 7] FIG. 7 is a diagram illustrating an example of a low-beam light distribution pattern according to the first embodiment as the first aspect.
[FIG. 8] FIG. 8 is a diagram for explaining generation of a high-beam image.
[FIG. 9] FIG. 9 is a diagram illustrating an example of a high-beam light distribution pattern according to the first embodiment as the first aspect, similar to FIG. 7.
[FIG. 10] FIG. 10 is a diagram for explaining generation of an ADB light distribution image.
[FIG. 11] FIG. 11 is a diagram illustrating an example of a modified dimming rate distribution.
[FIG. 12] FIG. 12 is a diagram illustrating an example of an ADB light distribution pattern according to the first embodiment as the first aspect, similar to FIG. 7.
[FIG. 13] FIG. 13 is a diagram illustrating a dimming rate distribution according to a first modification as the first aspect.
[FIG. 14] FIG. 14 is a diagram illustrating an example of the dimming rate distribution according to the first modification as the first aspect.
[FIG. 15] FIG. 15 is a diagram illustrating a dimming rate distribution according to a second modification as the first aspect.
[FIG. 16] FIG. 16 is a diagram illustrating an example of the dimming rate distribution according to the second modification as the first aspect.
[FIG. 17] FIG. 17 is a diagram illustrating a dimming rate distribution according to a third modification as the first aspect.
[FIG. 18] FIG. 18 is a diagram illustrating the dimming rate distribution along line XVIII-XVIII in FIG. 17.
[FIG. 19] FIG. 19 is a diagram illustrating an example of the dimming rate distribution according to the third modification as the first aspect.
[FIG. 20] FIG. 20 is a diagram illustrating a dimming rate distribution according to a fourth modification as the first aspect.
[FIG. 21] FIG. 21 is a diagram illustrating an example of a low-beam light distribution pattern according to a second embodiment as a second aspect, similar to FIG. 7.
[FIG. 22] FIG. 22 is a diagram illustrating an example of a high-beam light distribution pattern according to the second embodiment as the second aspect, similar to FIG. 21.
[FIG. 23] FIG. 23 is a diagram for explaining generation of an ADB light distribution image according to the second embodiment as the second aspect.
[FIG. 24] FIG. 24 is a diagram illustrating an example of an ADB light distribution pattern according to the second embodiment as the second aspect, similar to FIG. 22.
[FIG. 25] FIG. 25 is a diagram illustrating a light amount distribution of the ADB light distribution pattern along line XXV-XXV in FIG. 24.
[FIG. 26] FIG. 26 is a graph illustrating an example of a temporal variation in the brightening amount in a second region.
[FIG. 27] FIG. 27 is a diagram for explaining generation of an ADB light distribution image according to a third embodiment as the second aspect.
[FIG. 28] FIG. 28 is a diagram illustrating a relationship between a brightening rate distribution and a brightness distribution of a high-beam image.
[FIG. 29] FIG. 29 is a diagram illustrating a light amount distribution of the high-beam light distribution pattern along line XXIX-XXIX in FIG. 22.
[FIG. 30] FIG. 30 is a diagram illustrating an example of an ADB light distribution pattern according to a modification as the second aspect, similar to FIG. 24.

### Description of Embodiments

Hereinafter, a suitable embodiment of a vehicle headlight according to the present invention will be described in detail with reference to the drawings. The embodiments exemplified below are intended to facilitate understanding of the present invention and are not intended to limit the present invention. The present invention can be modified and improved without departing from the gist thereof. In addition, in the present invention, components in the following exemplary embodiments may be appropriately combined. Note that, in the drawings referred to below, dimensions of each member may be changed to facilitate understanding. In addition, in the drawings, for the sake of clarity, only some of similar components are denoted by reference numerals, and the others may not be denoted by reference numerals.

### (First Embodiment)

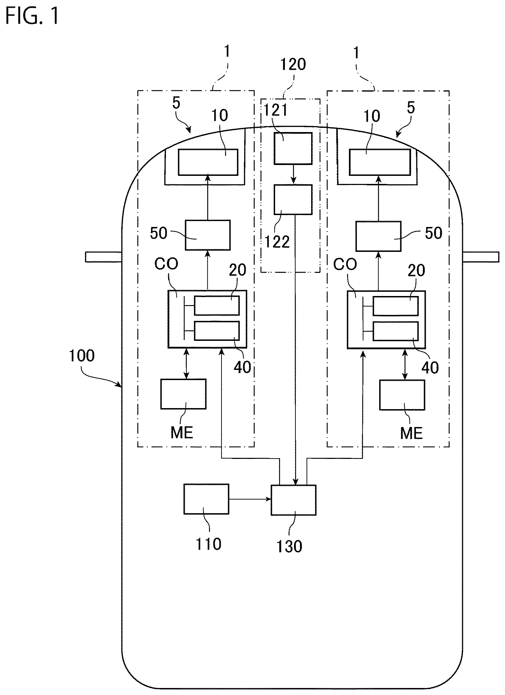

A first embodiment as a first aspect of the present invention will be described. FIG. 1 is a plan view conceptually illustrating a vehicle including a vehicle headlight of the present embodiment. As illustrated in FIG. 1, a vehicle 100 is an automobile and includes a pair of left and right vehicle headlights **1,** a light switch 110, a detection device 120, and an electronic control unit (ECU) 130. In the present specification, unless otherwise specified, the "right" means the right side in the forward direction of the vehicle 100 that is a host vehicle, the "left" means the left side in the forward direction, and a driver means a driver of the vehicle 100.

Each of the vehicle headlights 1 includes a lamp assembly 5, a control unit CO, a memory ME, and a power supply circuit 50 as main components. In general, a lamp assembly 5 of one vehicle headlight 1 is disposed on the left side of the front part of the vehicle 100, and a lamp assembly 5 of the other vehicle headlight 1 is disposed on the right side of the front part. The configuration of the one vehicle headlight 1 is the same as the configuration of the other vehicle headlight 1 except that the shape of the lamp assemblies 5 is substantially symmetrical with left-right symmetry. Therefore, hereinbelow, one vehicle headlight 1 will be described, and the description of the other vehicle headlight 1 will not be described.

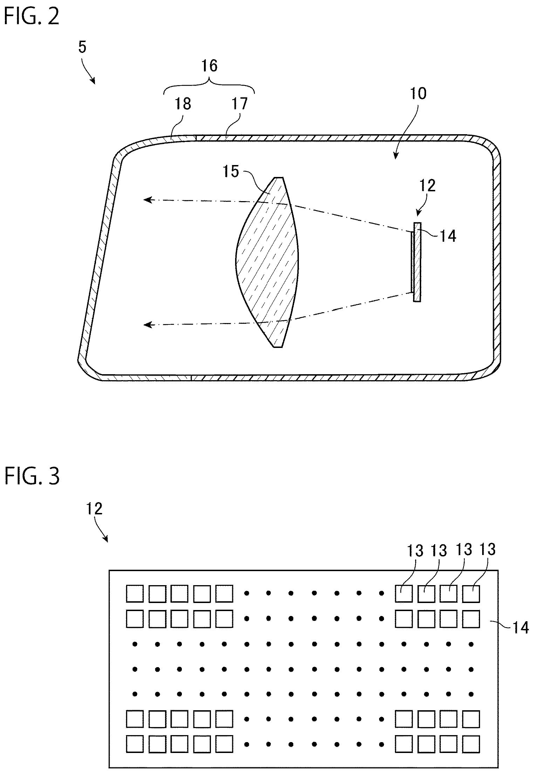

FIG. 2 is a cross-sectional view schematically illustrating the lamp assembly 5. The lamp assembly 5 includes a lamp unit 10 and an assembly body 16 as main components.

The assembly body 16 includes a housing 17 and a front cover 18. The front cover 18 transmits light emitted from the lamp unit 10. The housing 17 is formed in a box shape having an opening at the front, and the front cover 18 is fixed to the housing 17 to cover the opening. In this way, a housing space surrounded by the housing 17 and the front cover 18 is formed in the assembly body 16, and the lamp unit 10 is disposed in the housing space. This lamp unit 10 includes a light source unit 12 and a projection lens 15. The power supply circuit 50, the control unit CO, and the memory ME are disposed outside the assembly body 16, but may be disposed in the housing space of the assembly body 16.

FIG. 3 is a front view schematically illustrating the light source unit 12 illustrated in FIG. 2. As illustrated in FIG. 3, the light source unit 12 of the present embodiment includes a plurality of light-emitting elements 13 as a light-emitting unit that emits light by electric power, and a circuit board 14 on which the plurality of light-emitting elements 13 is mounted. The plurality of light-emitting elements 13 has an arrangement in a matrix form to form rows in the vertical direction and the lateral direction, and emit light forward. These light-emitting elements 13 can individually change the light amount of emitted light. In the present embodiment, these light-emitting elements 13 are micro LEDs, and the light source unit 12 is a so-called micro LED array. Note that the number of the light-emitting elements 13 arranged in the lateral direction and the number of the light-emitting elements 13 arranged in the vertical direction are not limited. In addition, the type of the light-emitting element 13 is not limited.

Such a light source unit 12 can form a predetermined light distribution pattern according to selection of the light-emitting elements 13 that emits light. In addition, the light source unit 12 can adjust the light amount of light emitted from each of the light-emitting elements 13 to adjust the light intensity distribution in the predetermined light distribution pattern. Therefore, the light source unit 12 can emit light with a light distribution pattern according to the light amount of light emitted from the plurality of light-emitting elements 13.

In the present embodiment, each of the light-emitting elements 13 corresponds to a pixel of an image generated by an image generation unit 20 described later. The light source unit 12 adjusts the light amount of light emitted from each of the light-emitting elements 13 according to data of a pixel corresponding to a light-emitting element 13, and emits light based on this image, so that a light distribution pattern based on this image is formed by the light. In the present embodiment, the light-emitting element 13 and the pixel correspond to each other on a one-to-one basis, but are not particularly limited.

The projection lens 15 is disposed in front of the light source unit 12, light emitted from the light source unit 12 is incident thereon, and a divergence angle of this light is adjusted by the projection lens 15. Therefore, light whose divergence angle is adjusted by the projection lens 15 is emitted from the lamp unit 10, and the light is emitted from the lamp assembly 5 to the front of the vehicle 100 through the front cover 18. The projection lens 15 of the present embodiment is a lens in which a light incident surface and a light-emitting surface are formed in a convex shape, and the rear focal point of the projection lens 15 is positioned on or in the vicinity of the light-emitting surface of any one of the light-emitting elements 13 in the light source unit 12. Therefore, the light distribution pattern of the light emitted toward the front of the vehicle 100 is a light distribution pattern that is vertically and laterally inverted from the light distribution pattern of the light emitted from the light source unit 12, and the image representing this light distribution pattern is an image that is vertically and laterally inverted from the image representing the light distribution pattern of the light emitted from the light source unit 12.

The memory ME illustrated in FIG. 1 is configured to be able to store information and read the stored information. The memory ME is, for example, a non-transitory recording medium, and is preferably a semiconductor recording medium such as a random access memory (RAM) or a read only memory (ROM), but can include a recording medium in any format such as an optical recording medium or a magnetic recording medium. Note that the "non-transitory" recording medium includes all computer-readable recording media except for a transitory, propagating signal, and does not exclude a volatile recording medium. Various computer programs for controlling the lamp unit 10 and information necessary for the control are stored in the memory ME, and the control unit CO reads the computer programs and information stored in the memory ME.

The control unit CO includes, for example, an integrated circuit such as a microcontroller, an integrated circuit (IC), a large-scale integrated circuit (LSI), or an application specific integrated circuit (ASIC), or a numerical control (NC) device. In addition, in a case where the NC device is used, the control unit CO may use a machine learning device or may not use a machine learning device. The control unit CO is electrically connected to the ECU 130, and the control units CO in the respective vehicle headlights 1 are electrically connected to each other via the ECU 130. Note that the control units CO may be electrically directly connected to each other without the ECU 130.

The control unit CO of the present embodiment includes an image generation unit 20 and a light distribution control unit 40, with the various computer programs in a read-out state from the memory ME, and receives a signal from the detection device 120 via the ECU130.

The image generation unit 20 generates an image on the basis of an image and a dimming rate distribution stored in the memory ME. In the present embodiment, signals from the light switch 110 and the detection device 120 described later are input to the image generation unit 20, and the image generation unit 20 generates an image according to these signals. Note that information on the images and information on the dimming rate distribution stored in the memory ME may be read from a memory outside the vehicle via a wireless communication device provided in the vehicle 100.

The images stored in the memory ME of the present embodiment are a low-beam image in which light emitted from the light source unit 12 forms a low-beam light distribution pattern, and an additional light distribution image in which light emitted from the light source unit 12 forms an additional light distribution pattern as a reference light distribution pattern. This additional light distribution pattern is a light distribution pattern that, when added to the low-beam light distribution pattern, forms a high-beam light distribution pattern, and is a light distribution pattern that is a part of the high beam. These images are grayscale images in which data of each pixel in each image is a gray value, and a pixel having a larger gray value is brighter. However, the data of each pixel is not particularly limited.

The dimming rate is a brightness lowering ratio in an image, and the dimming rate distribution is the distribution of the corresponding ratios. The higher the dimming rate the lower the brightness, the brightness is 0 in a case where the dimming rate is 100%, and the brightness does not change in a case where the dimming rate is 0%. The information on the dimming rate distribution of the present embodiment is data of an image in which the data of each pixel represents a dimming rate, but is not limited thereto. Although details will be described later, a dimming rate distribution is superimposed on a part of an image, and the brightness of the part is lowered on the basis of the dimming rate distribution.

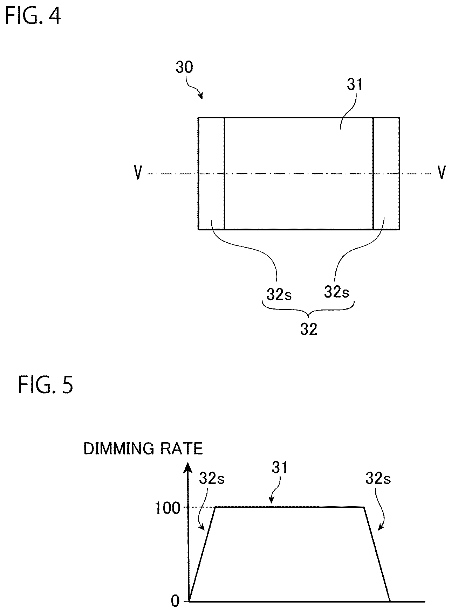

FIG. 4 is a diagram illustrating a dimming rate distribution according to the present embodiment, and FIG. 5 is a diagram illustrating the dimming rate distribution along line V-V in FIG. 4. As illustrated in FIGS. 4 and 5, a dimming rate distribution 30 includes a dimming section 31 having a dimming rate of a predetermined value or more and a gradient section 32 being along at least parts of edges of the dimming section 31 and having a dimming rate of a predetermined value or less. In the present embodiment, the dimming section 31 has a quadrangular shape, specifically, a rectangular shape. The gradient section 32 includes a pair of side gradient sections 32s that are along the left and right edges of the dimming section 31, respectively. In addition, the side gradient sections 32s are along the entire left and right edges of the dimming section 31, respectively, but only sufficient to be along at least a part of each of the left and right edges of the dimming section 31. Furthermore, the above-described predetermined value is 100%, but may be lower than 100%. However, the predetermined value is preferably 50% or more. Moreover, a gradient of the dimming rate of the side gradient section 32s in the direction from the dimming section 31 side toward the opposite side to the dimming section 31 is constant, a dimming rate at an edge of the side gradient section 32s on the dimming section 31 side is 100%, and a dimming rate at an edge of the side gradient section 32s on the opposite side to the dimming section 31 is 0%. However, the dimming rate of each side gradient section 32s is equal to or less than a predetermined value, and only sufficient to decrease from the dimming section 31 side toward the opposite side to the dimming section 31. For example, a gradient of the dimming rate may vary from the dimming section 31 side toward the opposite side to the dimming section 31. In addition, the dimming rate at the edge of each side gradient section 32s on the dimming section 31 side may be less than the predetermined value, but is preferably the predetermined value. Furthermore, the dimming rate at the edge of each side gradient section 32s on the opposite side to the dimming section 31 may be more than 0%, but is preferably 0%.

The light distribution control unit 40 of the present embodiment controls the power supply circuit 50 on the basis of either the information of the low-beam image stored in the memory ME or the information of the image generated by the image generation unit 20, thereby controlling the lamp unit 10.

The power supply circuit 50 includes a driver, and upon an input of a control signal from the control unit CO, electric power supplied from a power supply (not illustrated) to each light-emitting element 13 of the light source unit 12 is adjusted by this driver. In the present embodiment, the light-emitting element 13 corresponding to a pixel having a larger gray value is supplied with a larger amount of electric power. In addition, the driver of the power supply circuit 50 adjusts the electric power supplied to each light-emitting element 13 by pulse width modulation (PWM) control, thereby adjusting the light amount of light emitted from each light-emitting element 13. However, a method of adjusting the light amount of light emitted from each light-emitting element 13 is not particularly limited.

The light switch 110 of the present embodiment is a switch used to select one of emission of a low beam, emission of a high beam, and non-emission of light. In a case where the emission of the low beam or the emission of the high beam is selected, the light switch 110 outputs a signal indicating the selected state to the control unit CO via the ECU 130 of the vehicle 100. In addition, the light switch 110 outputs no signal in a case where the non-emission of light is selected.

The detection device 120 of the present embodiment detects a predetermined object positioned in front of the vehicle 100. Examples of the predetermined object include a retroreflective object, a human such as a pedestrian, and target vehicles such as a preceding vehicle and an oncoming vehicle. The retroreflective object of the present embodiment is an object that does not emit light by itself and retroreflects emitted light at a predetermined divergence angle, and examples of such a retroreflective object include a road sign and the like. The detection device 120 of the present embodiment includes an image acquisition unit 121 and a detection unit 122.

The image acquisition unit 121 acquires an image in front of the vehicle 100, and this image includes at least a part of a region irradiated with light emitted from the pair of vehicle headlights 1. Examples of the image acquisition unit 121 include a charged coupled device (CCD) camera, a complementary metal oxide semiconductor (CMOS) camera, a light detection and ranging (LiDAR), and a millimeter wave radar. The image acquisition unit 121 outputs a signal related to the acquired image to the detection unit 122.

The detection unit 122 has, for example, a configuration similar to that of the control unit CO. The detection unit 122 performs predetermined image processing on the image acquired by the image acquisition unit 121, and detects the presence of a predetermined object, the position where the object is present in the image, the type of the object, and the like from the image subjected to the image processing.

In a case of detecting the predetermined object from the image, the detection unit 122 outputs a signal indicating information related to the object to the control unit CO via the ECU 130. The information related to the predetermined object includes the presence of the object, the position where the object is present in the image, the type of the object, and the like. In addition, in a case of detecting no predetermined object, the detection unit 122 outputs a signal indicating that there is no predetermined object to the control unit CO via the ECU 130, but may not output the signal.

Note that the predetermined object detected by the detection device 120, the number of types of the object, and the configuration of the detection device 120 are not particularly limited. For example, the image acquisition unit 121 may be a CCD camera and a LiDAR, and in this case, the detection unit 122 detects the predetermined object on the basis of images acquired by the CCD camera and the LiDAR. In addition, a method of detecting the predetermined object by the detection unit 122 is not limited. For example, in a case of receiving information of an image in which a pair of white light spots and a pair of red light spots having luminance higher than predetermined luminance are present at a predetermined interval in the lateral direction from the image acquisition unit 121, the detection unit 122 detects the presence of a target vehicle as the predetermined object and the position where the target vehicle is present from the light spots. For example, in a case of receiving information of an image in which the pair of white light spots is present from the image acquisition unit 121, the detection unit 122 identifies the target vehicle as an oncoming vehicle. In addition, in a case of receiving information of an image in which the pair of red light spots is present from the image acquisition unit 121, the detection unit 122 identifies the target vehicle as a preceding vehicle. For example, the pair of white light spots corresponds to headlights of the oncoming vehicle, and the pair of red light spots corresponds to tail lights of the preceding vehicle.

Next, the operation of the vehicle headlight 1 of the present embodiment will be described. In the present embodiment, the operations of the pair of vehicle headlights 1 are the same and synchronized with each other. Therefore, hereinbelow, the operation of one vehicle headlight 1 will be described, and the description of the operation of the other vehicle headlight 1 will not be described.

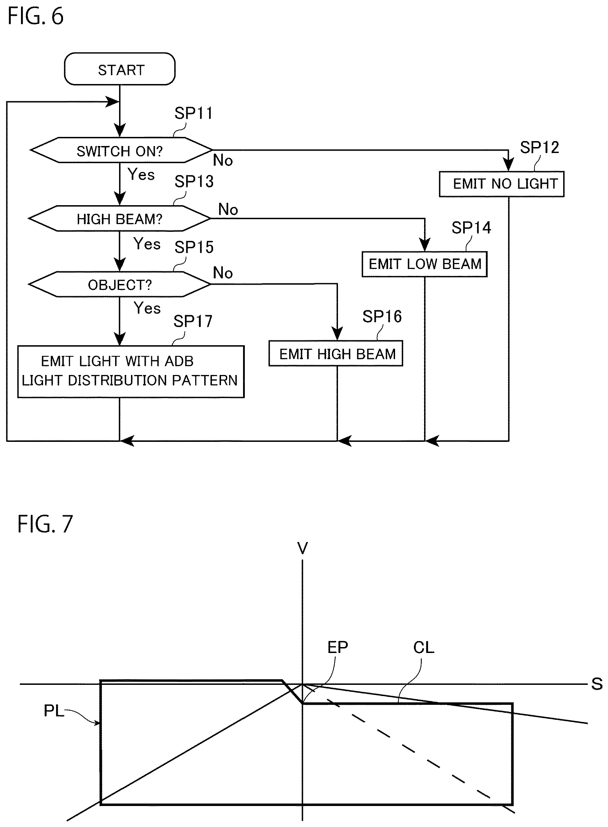

FIG. 6 is a control flowchart of the control unit CO according to the present embodiment. As illustrated in FIG. **6****,** the control flow includes steps SP11 to SP17. In the starting state illustrated in FIG. **6****,** it is assumed that a signal is input to the control unit CO from the detection device 120.

### (Step SP11)

In the present step, in a case of receiving no signal from the light switch 110, the control unit CO proceeds with the control flow to step SP12, and in a case of receiving this signal, the control unit CO proceeds with the control flow to step SP13.

### (Step SP12)

In the present step, the light distribution control unit 40 in the control unit CO controls the power supply circuit 50 to cause the lamp unit 10 to emit no light. Thus, the vehicle headlight 1 does not emit light. Then, the control unit CO returns the control flow to step SP11.

### (Step SP13)

In the present step, in a case of receiving a signal related to the emission of the low beam from the light switch 110, the control unit CO proceeds with the control flow to step SP14. In addition, in a case of receiving a signal related to the emission of the high beam from the light switch 110, the control unit CO proceeds with the control flow to step SP15.

### (Step SP14)

In the present step, the control unit CO controls the lamp unit 10 such that the low beam is emitted from the vehicle headlight **1.** Specifically, the image generation unit 20 reads the low-beam image stored in the memory ME, and the light distribution control unit 40 controls the power supply circuit 50 on the basis of the information of the low-beam image to supply electric power to each of the light-emitting elements 13 of the light source unit 12. According to the supply of this electric power, the light source unit 12 emits light based on the low-beam image, and light with the low-beam light distribution pattern is emitted from the vehicle headlight 1. In this way, the low beam is emitted from the vehicle headlight 1.

FIG. 7 is a diagram illustrating an example of a low-beam light distribution pattern according to the present embodiment. In FIG. 7, S indicates a horizontal line, V indicates a vertical line passing through the center of the vehicle 100 in the lateral direction, and a low-beam light distribution pattern PL formed on a virtual vertical screen arranged 25 m ahead of the vehicle 100 is indicated by a thick line. A cutoff line CL in the low-beam light distribution pattern PL of the present embodiment includes an elbow point EP positioned below the horizontal line S and on or in the vicinity of the vertical line V, and is offset from the horizontal line S. That is, the low-beam image is an image representing such a low-beam light distribution pattern PL. In a case where the low beam is emitted from the vehicle headlight 1, the control unit CO returns the control flow to step SP11.

### (Step SP15)

In the present step, in a case of receiving a signal indicating that the predetermined object is not present from the detection device 120, the control unit CO proceeds with the control flow to step SP16, and in a case of receiving a signal indicating information related to the predetermined object from the detection device 120, the control unit CO proceeds with the control flow to step SP17.

### (Step SP16)

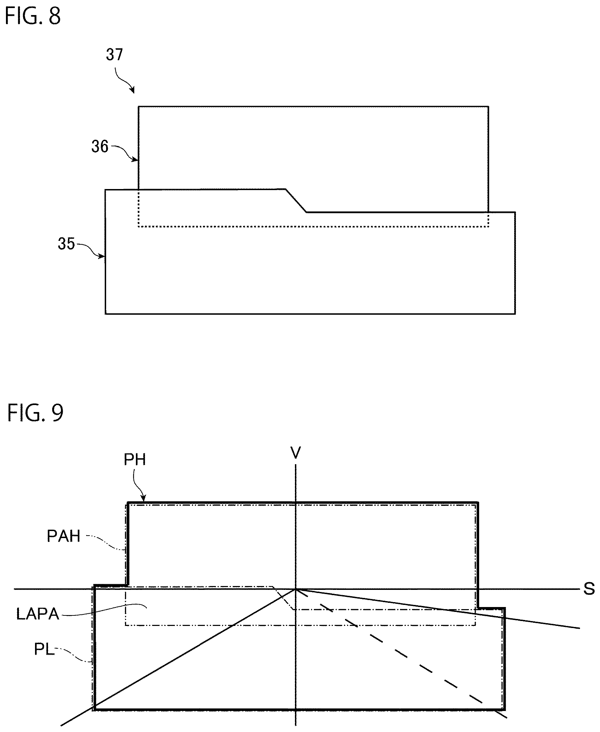

In the present step, the control unit CO controls the lamp unit 10 such that the high beam is emitted from the vehicle headlight 1. Specifically, first, the image generation unit 20 generates a high-beam image representing a high-beam light distribution pattern. FIG. 8 is a diagram for explaining generation of the high-beam image. As illustrated in FIG. 8, the image generation unit 20 reads a low-beam image 35 stored in the memory ME and an additional light distribution image 36 as the reference image, and generates a high-beam image 37 in which the low-beam image 35 is superimposed on a part of the additional light distribution image 36. In the present embodiment, the low-beam image 35 is prioritized over the additional light distribution image 36, and an image of the part where the low-beam image 35 and the additional light distribution image 36 are superimposed is an image of the part in the low-beam image 35. Note that the image composition is not limited, and for example, the additional light distribution image 36 may be prioritized over the low-beam image 35.

The light distribution control unit 40 controls the power supply circuit 50 on the basis of the information of the high-beam image 37 to supply electric power to each of the light-emitting elements 13 of the light source unit 12. According to the supply of this electric power, the light source unit 12 emits light based on the high-beam image, and light with the high-beam light distribution pattern is emitted from the vehicle headlight 1. In this way, in a case where the predetermined object is not positioned in front of the vehicle 100, the high beam is emitted from the vehicle headlight 1. In addition, as described above, the image representing the light distribution pattern of the light emitted toward the front of the vehicle 100 is an image obtained by vertically and laterally inverted from the image representing the light distribution pattern of the light emitted from the light source unit 12. In the present embodiment, the upper right pixels in the high-beam image 37 illustrated in FIG. 8 correspond to the lower right light-emitting elements 13 illustrated in FIG. 3, the lower left pixels in the high-beam image 37 illustrated in FIG. 8 correspond to the upper left light-emitting elements 13 illustrated in FIG. 3, and the correspondence relationship is vertically inverted. Therefore, the high-beam light distribution pattern obtained by emitting the light toward the front of the vehicle 100 is a light distribution pattern corresponding to the image illustrated in FIG. 8. Note that pixels in images in the following drawings correspond to the light-emitting elements 13, similar to the image illustrated in FIG. 8.

FIG. 9 is a diagram illustrating an example of a high-beam light distribution pattern according to the present embodiment, similar to FIG. 7. As described above, a high-beam light distribution pattern PH illustrated in FIG. 9 is formed by the light based on the high-beam image 37 in which the low-beam image 35 is superimposed on a part of the additional light distribution image 36. Therefore, it can be understood that a low-beam light distribution pattern PL and an additional light distribution pattern PAH are superimposed on each other to form the high-beam light distribution pattern PH. In FIG. 9, the low-beam light distribution pattern PL is indicated by one-dot chain line, and the additional light distribution pattern PAH is indicated by two-dot chain line. In addition, the additional light distribution pattern PAH and the low-beam light distribution pattern PL are slightly shifted vertically and laterally. Note that the light distribution pattern of a region LAPA in which the low-beam light distribution pattern PL and the additional light distribution pattern PAH are superimposed in the high-beam light distribution pattern PH is a light distribution pattern of the region LAPA in the low-beam light distribution pattern PL. In a case where the high beam is emitted from the vehicle headlight 1, the control unit CO returns the control flow to step SP11.

### (Step SP17)

In this step, the control unit CO controls the lamp unit 10 such that the light distribution pattern of the light emitted from the vehicle headlight 1 is an ADB light distribution pattern as a specific light distribution pattern corresponding to the predetermined object. The ADB light distribution pattern is a light distribution pattern in which a dimming region superimposed on a predetermined object, where the light amount is decreased, and a gradient region that is along the edges of the dimming region, where the light amount is decreased, are formed in the additional light distribution pattern PAH of the high-beam light distribution pattern PH.

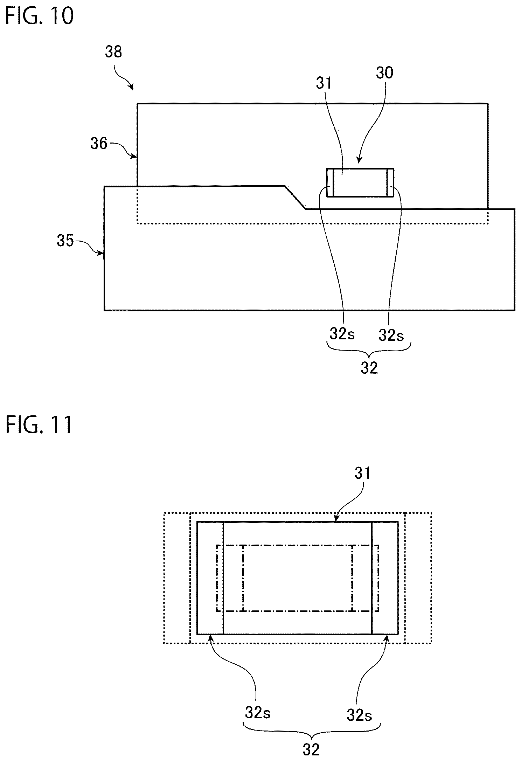

First, the image generation unit 20 generates an ADB light distribution image representing the ADB light distribution pattern. FIG. 10 is a diagram for explaining generation of the ADB light distribution image. The image generation unit 20 reads the low-beam image 35, the additional light distribution image 36, and the dimming rate distribution 30 stored in the memory ME. Then, as illustrated in FIG. 10, the image generation unit 20 superimposes the dimming rate distribution 30 on a part of the additional light distribution image 36, or enlarges or reduces at least a part of the dimming rate distribution 30 while maintaining the state in which the gradient section 32 is along the edges of the dimming section 31, and superimposes the dimming rate distribution 30 on a part of the additional light distribution image 36 to lower the brightness of the part of the additional light distribution image 36 on the basis of the information of the predetermined object, which is received from the detection device 120. Specifically, the brightness indicated by the pixel in the part in the additional light distribution image 36, superimposed on the dimming rate distribution 30, is lowered by the dimming rate of the dimming rate distribution 30 superimposed on the pixel. The additional light distribution image 36 in which the brightness is partially lowered as described above is an image representing an additional light distribution pattern in which the dimming region corresponding to the dimming section 31, where the light amount is decreased, and the gradient regions corresponding to the gradient section 32 and being along the edges of the dimming region, where the light amount is decreased, are formed.

FIG. 11 is a diagram illustrating an example of a modified dimming rate distribution. In FIG. 11, the dimming rate distribution 30 without modification is indicated by solid line, an example of an enlarged dimming rate distribution 30 is indicated by dotted line, and an example of a reduced dimming rate distribution 30 is indicated by one-dot chain line. As illustrated in FIG. 11, in the present embodiment, in a case where the dimming rate distribution 30 is enlarged, the dimming section 31 is enlarged in at least one of the vertical direction or the lateral direction. In addition, the side gradient sections 32s are along the entire left and right edges of the enlarged dimming section 31, and the widths of the side gradient sections 32s in the direction perpendicular to the direction in which the side gradient sections 32s are along the dimming section 31. Hereinafter, the width of the gradient section 32 in the above-described direction is simply referred to as the width of the gradient section 32. In addition, in a case where the dimming rate distribution 30 is reduced, the dimming section 31 is reduced in at least one of the vertical direction or the lateral direction. Furthermore, the side gradient sections 32s are along the entire left and right edges of the reduced dimming section 31, and the widths of the side gradient sections 32s are kept constant. In such a modification of the dimming rate distribution 30, the state in which the gradient section 32 is along the edges of the dimming section 31 is maintained. Note that the modification of the dimming rate distribution 30 is only sufficient to be a modification in which at least a part of the dimming rate distribution 30 is enlarged or reduced while maintaining the state in which the gradient section 32 is along the edges of the dimming section 31. For example, the dimming section 31 may be enlarged or reduced while the width of the side gradient sections 32s is enlarged or reduced. In addition, the entire dimming rate distribution 30 may be enlarged or reduced in at least one of the vertical direction or the lateral direction.

Examples of a method of modifying the dimming rate distribution 30 include affine transformation, but the method of modifying the dimming rate distribution 30 is not limited. For example, in a case where at least a part of the dimming rate distribution 30 is enlarged by using affine transformation, the image generation unit 20 may perform correction processing of smoothing the variation in a dimming rate in the enlarged dimming rate distribution 30.

Next, the image generation unit 20 generates the ADB light distribution image 38 in which the low-beam image 35 is superimposed on a part of the additional light distribution image 36 in which the brightness of the part is lowered. This ADB light distribution image 38 is an image in which the brightness of a part of the additional light distribution image 36 in the high-beam image 37 illustrated in FIG. 8 is lowered. Similar to the case of generating the high-beam image 37, the low-beam image 35 is prioritized over the additional light distribution image 36, and an image of the part where the low-beam image 35 and the additional light distribution image 36 are superimposed is an image of the part in the low-beam image 35. Note that the image composition is not limited, and for example, the additional light distribution image 36 may be prioritized over the low-beam image 35. The light distribution pattern represented by the generated ADB light distribution image 38 is an ADB light distribution pattern in which a dimming region corresponding to the dimming section, where the light amount is decreased, and gradient regions corresponding to the gradient section and being along the edges of the dimming region, where the light amount is decreased, are formed in the additional light distribution pattern PAH of the high-beam light distribution pattern PH.

The light distribution control unit 40 controls the power supply circuit 50 on the basis of the information of this ADB light distribution image 38 to supply electric power to each of the light-emitting elements 13 of the light source unit 12. According to the supply of this electric power, the light source unit 12 emits light based on the ADB light distribution image 38, and light with the ADB light distribution pattern is emitted from the vehicle headlight 1.

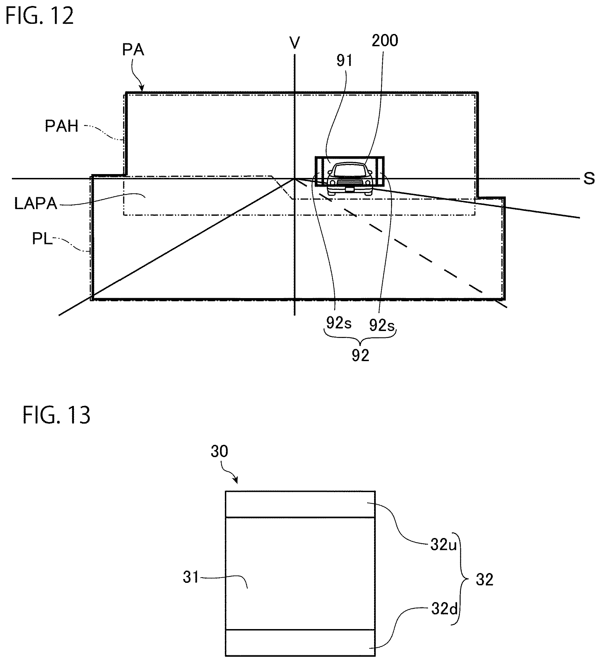

FIG. 12 is a diagram illustrating an example of the ADB light distribution pattern according to the present embodiment, similar to FIG. 7, and is a diagram illustrating the ADB light distribution pattern in a case where a target vehicle 200 is positioned as a predetermined object in front of the vehicle 100. In FIG. 12, the target vehicle 200 is an oncoming vehicle, the low-beam light distribution pattern PL is indicated by one-dot chain line, and the additional light distribution pattern PAH is indicated by two-dot chain line. The additional light distribution pattern PAH in the ADB light distribution pattern PA is a light distribution pattern represented by an image in which the brightness of a part of the additional light distribution image 36 is decreased by the dimming rate distribution 30 or the dimming rate distribution 30 having at least a part enlarged or reduced while maintaining the gradient section 32 to be along the edges of the dimming section 31. Therefore, this additional light distribution pattern PAH is provided with a dimming region 91 corresponding to the dimming section 31 of the dimming rate distribution 30 and a gradient region 92 corresponding to the gradient section 32. Therefore, the positions of the dimming region 91 and the gradient region 92 in the additional light distribution pattern PAH correspond to the positions of the dimming section 31 and the gradient section 32 in the additional light distribution image 36, in the dimming rate distribution 30 superimposed on the additional light distribution image 36.

The light amount of the dimming region 91 is less than the light amount of the dimming region 91 in the additional light distribution pattern PAH of the high-beam light distribution pattern PH. In the present embodiment, since the dimming rate of the dimming section 31 is 100% as a predetermined value, the dimming region 91 is a lightshielding region that is not irradiated with light. In addition, the shape of the dimming region 91 has a quadrangular shape, specifically, a rectangular shape. In addition, the dimming region 91 is superimposed on the target vehicle 200, and at least a part of the dimming region 91 is not superimposed on the low-beam light distribution pattern PL. That is, the image generation unit 20 adjusts the position where the dimming section 31 of the dimming rate distribution 30 is superimposed on the additional light distribution image 36 and the shape of the dimming section 31 such that the dimming region 91 is as described above. Therefore, according to the vehicle headlight 1 of the present embodiment, the amount of light emitted to the target vehicle 200 is decreased, and glare for the driver of the target vehicle 200 can be reduced. In the example illustrated in FIG. 12, the dimming region 91 is superimposed on an upper part of the license plate of the target vehicle 200. However, from the viewpoint of reducing glare for the driver of the target vehicle 200, it is only sufficient that the dimming region 91 is superimposed on at least a part of a visibility section for the driver of the target vehicle 200 to visually recognize the outside of the vehicle. Note that the visibility section of a preceding vehicle is, for example, side-view mirrors, a rear window, an imaging device that images the rear of the vehicle, or the like, and the visibility section of an oncoming vehicle is, for example, a windshield. These visibility sections are generally positioned above the license plate.

The gradient region 92 is along the edges of the dimming region 91, and the light amount of the gradient region 92 is less than the light amount of the gradient region 92 in the additional light distribution pattern PAH of the high-beam light distribution pattern PH. In addition, the dimming rate of the gradient section 32 corresponding to the gradient region 92 is equal to or less than 100% as a predetermined value, and is decreased from the dimming section 31 side toward the opposite side to the dimming section 31. Therefore, the gradient region 92 can be brighter than the dimming region 91, and the brightness of the gradient region 92 can be decreased from the opposite side to the dimming region 91 toward the dimming region 91. In the example illustrated in FIG. 12, the brightness of the gradient region 92 is as described above.

In the present embodiment, the gradient section 32 includes the pair of side gradient sections 32s that are along the left and right edges of the dimming section 31, respectively. In addition, the image generation unit 20 enlarges or reduces at least a part of the dimming rate distribution 30 while maintaining the state in which the gradient section 32 is along the edges of the dimming section 31, and superimposes the dimming rate distribution 30 on a part of the additional light distribution image 36 to lower the brightness of the part of the additional light distribution image 36. Therefore, the gradient region 92 includes a pair of side gradient regions 92s that are along the left and right edges of the dimming region 91, respectively. In addition, since the side gradient sections 32s are along the entire left and right edges of the dimming section 31, the side gradient regions 92s are along the entire left and right edges of the dimming region 91. Furthermore, in the present embodiment, the widths of the side gradient regions 92s in the direction perpendicular to the direction where the side gradient regions 92s are along the dimming region 91 are predetermined widths. That is, the image generation unit 20 adjusts the shape of the side gradient section 32s of the dimming rate distribution 30 such that the side gradient regions 92s are as described above. Hereinafter, the width of the gradient region in the direction perpendicular to the direction in which the gradient region is along the dimming region may be simply referred to as the width of the gradient region. In a case where the light with the ADB light distribution pattern PA is emitted from the vehicle headlight 1, the control unit CO returns the control flow to step SP11.

In this way, in the vehicle headlight 1 of the present embodiment, in a case where the emission of the high beam is selected by the light switch 110, the light distribution pattern of the emitted light changes according to the predetermined object.

On the other hand, in the vehicle headlight described in Patent Literature 1, as described above, the light distribution pattern forming unit forms a light distribution pattern by adjusting the light amount of light emitted from each of micro LEDs. Therefore, the light distribution pattern formed by the light distribution pattern forming unit can be represented as an image based on the light amount of the light emitted from each of the micro LEDs, and it can be considered that the light distribution pattern forming unit emits light based on this image. In this vehicle headlight described in Patent Literature 1, it will be considered for a case of forming an ADB light distribution pattern including a dimming region superimposed on a target vehicle, where the light amount is decreased, and gradient regions that are along edges of the dimming region, where the light amount is decreased from the opposite side to the dimming region toward the dimming region. In this case, it is necessary to store information on the light amount of light emitted from each of the micro LEDs for each of a large number of ADB light distribution patterns according to the position of the target vehicle relative to the host vehicle in the memory, and the amount of information stored in the memory increases.

Accordingly, the vehicle headlight 1 of the present embodiment includes the image generation unit 20 that receives a signal from the detection device 120 and generates an image, the light source unit 12 that emits light based on the image generated by the image generation unit 20, and the memory ME. The memory ME stores the additional light distribution image 36 in which light emitted from the light source unit 12 forms the additional light distribution pattern PAH, and the dimming rate distribution 30 that is a dimming rate distribution superimposed on a part of the additional light distribution image 36 to lower the brightness of the part thereof. The dimming rate distribution 30 includes the dimming section 31 having a dimming rate of a predetermined value or more and the gradient section 32 along at least parts of edges of the dimming section 31. The dimming rate of the gradient section 32 is equal to or less than a predetermined value, and is decreased from the dimming section 31 side toward the opposite side to the dimming section 31. The image generation unit 20 enlarges or reduces at least a part of the dimming rate distribution 30 while maintaining the state in which the gradient section 32 is along the edges of the dimming section 31, and superimposes the dimming rate distribution 30 on a part of the additional light distribution image 36 to lower the brightness of the part of the additional light distribution image 36, thereby generating the ADB light distribution image 38. The ADB light distribution image 38 is an image obtained by light emitted from the light source unit 12 to form the ADB light distribution pattern PA as a specific light distribution pattern. The ADB light distribution pattern PA is a light distribution pattern in which the dimming region 91 corresponding to the dimming section 31 and superimposed on the target vehicle 200, where the light amount is decreased, and the gradient region 92 corresponding to the gradient section 32 and being along the edges of the dimming region 91, where the light amount is decreased, are formed in the additional light distribution pattern PAH.

In the vehicle headlight 1 of the present embodiment, in a case where the target vehicle 200 is positioned in front of the vehicle 100, the dimming region 91 corresponding to the dimming section 31 of the dimming rate distribution 30 and superimposed on the target vehicle 200, where the light amount is decreased, and the gradient region 92 corresponding to the gradient section 32 of the dimming rate distribution 30 and being along the edges of the dimming region 91 are formed in the additional light distribution pattern PAH. Therefore, as described above, the amount of light emitted to the target vehicle 200 is decreased, and glare for the driver of the target vehicle 200 can be reduced. In addition, the dimming rate of the gradient section 32 corresponding to the gradient region 92 is equal to or less than a predetermined value, and is decreased from the dimming section 31 side toward the opposite side to the dimming section 31. Therefore, the gradient region 92 can be brighter than the dimming region 91, and the brightness of the gradient region 92 can be decreased from the opposite side to the dimming region 91 toward the dimming region 91. Therefore, according to the vehicle headlight 1 of the present embodiment, as compared with a case where the gradient region 92 is not formed, the distinct visibility of the edges of the dimming region 91 can be reduced, and the movement of the dimming region can be controlled to minimize discomfort for the driver of the vehicle 100. In addition, in the vehicle headlight 1 of the present embodiment, as described above, the image generation unit 20 enlarges or reduces at least a part of the dimming rate distribution 30 while maintaining the state in which the gradient section 32 is along the edges of the dimming section 31, and superimposes the dimming rate distribution 30 on a part of the additional light distribution image 36 to lower the brightness of the part of the additional light distribution image 36, thereby generating the ADB light distribution image 38 representing the ADB light distribution pattern PA. Therefore, according to the vehicle headlight 1 of the present embodiment, even though the information stored in the memory ME includes the additional light distribution image 36 and the dimming rate distribution 30, it is possible to change the positions and sizes of the dimming region 91 and the gradient region 92. Therefore, according to the vehicle headlight 1 of the present embodiment, an increase in the amount of information stored in the memory ME can be suppressed as compared with a case where a plurality of ADB light distribution images 38 representing ADB light distribution patterns PA in which the positions and sizes of the dimming region 91 and the gradient region 92 are changed are stored in the memory ME.

In addition, in the vehicle headlight 1 of the present embodiment, the shape of the dimming section 31 is a quadrangle, and the gradient section 32 includes the pair of side gradient sections 32s that are along the left and right edges of the dimming section 31, respectively. The target vehicle 200 in the field of view of the driver of the vehicle 100 tends to move in the lateral direction, and the dimming region 91 also tends to move in the lateral direction. In the vehicle headlight 1 of the present embodiment, the gradient region 92 in the ADB light distribution pattern PA includes a pair of regions that are along the left and right edges of the dimming region 91, respectively, and the distinct visibility of the left and right edges of the dimming region 91 can be reduced. Therefore, according to the vehicle headlight 1 of the present embodiment, as compared with a case where the gradient region 92 does not includes the pair of regions that are along the left and right edges of the dimming region 91, respectively, the movement of the dimming region 91 can be controlled to minimize discomfort for the driver of the vehicle 100.

In the present embodiment, the case where the dimming region 91 is superimposed on the target vehicle 200 as a predetermined object has been described as an example. However, for example, in a case where the dimming region 91 is superimposed on at least a part of a human as a predetermined object, the amount of light emitted to the human can be decreased to reduce glare to the human. In this case, the dimming region 91 preferably is superimposed on only the head portion of the human. In addition, similarly to the target vehicle 200, the movement of the dimming region 91 can be controlled to minimize discomfort for the driver of the vehicle 100. Furthermore, in a case where the dimming region 91 is superimposed on at least a part of a retroreflective object as the predetermined object, the amount of light emitted to the retroreflective object is decreased. Therefore, the amount of reflected light returning to the vehicle 100 after being reflected by the retroreflective object, and glare to the driver of the vehicle 100 due to the reflected light can be reduced. In addition, similarly to the target vehicle 200, the movement of the dimming region 91 can be controlled to minimize discomfort for the driver of the vehicle 100.

Although the first aspect of the present invention has been described with the first embodiment as an example, the first aspect of the present invention is not limited thereto.

For example, in the dimming rate distribution 30 of the first embodiment, the shape of the dimming section 31 is a quadrangle, and the gradient section 32 includes the pair of side gradient sections 32s that are along the left and right edges of the dimming section 31, respectively. However, the dimming rate distribution 30 is only sufficient to include the dimming section 31 having a dimming rate of a predetermined value or more and the gradient section 32 along at least a part of the edges of the dimming section 31 and having a dimming rate of a predetermined value or less, the dimming rate decreasing from the dimming section 31 side toward the opposite side to the dimming section 31. For example, the shape of the dimming section 31 is not limited. In addition, the dimming rate distribution 30 may include dimming rate distributions of first to fourth modifications described below. Note that, in the description of the first to fourth modifications, the same or equivalent components as those of the above-described embodiment are denoted by the same reference numerals, and redundant description will not be repeated unless otherwise specified.

First, a first modification as the first aspect will be described. FIG. 13 is a diagram illustrating a dimming rate distribution according to the first modification. As illustrated in FIG. 13, a dimming rate distribution 30 of the first modification is different from the dimming rate distribution 30 of the above-described embodiment in that the gradient section 32 includes an upper gradient section 32u along an upper edge of a dimming section 31 and a lower gradient section 32d along a lower edge of the dimming section 31. The upper gradient section 32u is along the entire upper edge of the dimming section 31, but is only sufficient to be along at least a part of the upper edge of the dimming section 31. In addition, the lower gradient section 32d is along the entire lower edge of the dimming section 31, but is only sufficient to be along at least a part of the lower edge of the dimming section 31. Furthermore, although not illustrated, gradients of the dimming rates of the upper gradient section 32u and the lower gradient section 32d in the direction from the dimming section 31 side toward the opposite side to the dimming section 31 are constant. Moreover, the dimming rates at edges of the upper gradient section 32u and the lower gradient section 32d on the dimming section 31 side is 100% as a predetermined value, and the dimming rates at edges of the upper gradient section 32u and the lower gradient section 32d on the opposite side to the dimming section 31 is 0%. However, the dimming rates of the upper gradient section 32u and the lower gradient section 32d are equal to or less than a predetermined value, and are only sufficient to decrease from the dimming section 31 side toward the opposite side to the dimming section 31.

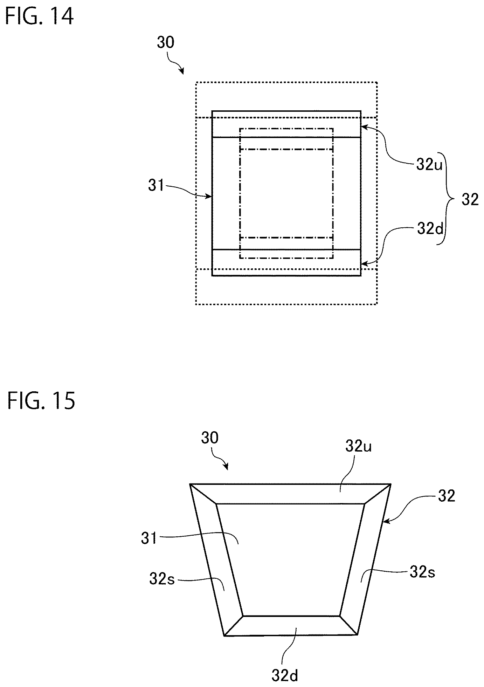

FIG. 14 is a diagram illustrating an example of a modified dimming rate distribution according to the first modification. In FIG. 14, the dimming rate distribution 30 without modification is indicated by solid line, an example of an enlarged dimming rate distribution 30 is indicated by dotted line, and an example of a reduced dimming rate distribution 30 is indicated by one-dot chain line. As illustrated in FIG. 14, in the first modification, the entire dimming rate distribution 30 is enlarged or reduced in at least one of the vertical direction or the lateral direction. Note that a method of modifying the dimming rate distribution 30 is not limited. For example, the enlargement ratio and reduction ratio of the dimming section 31 may be different from enlargement ratios and reduction ratios of the upper gradient section 32u and the lower gradient section 32d. In addition, the enlargement ratio and reduction ratio of the upper gradient section 32u and the enlargement ratio and reduction ratio of the lower gradient section 32d may be different from each other. Furthermore, as in the above-described embodiment, the widths of the upper gradient section 32u and the lower gradient section 32d may not change while the dimming section 31 is enlarged or reduced.

The dimming region 91 in the ADB light distribution pattern PA corresponds to the dimming section 31 of the dimming rate distribution 30, and the gradient region 92 in the ADB light distribution pattern PA corresponds to the gradient section 32 of the dimming rate distribution 30. Therefore, although not illustrated, in the first modification, the gradient region 92 includes an upper gradient region along the upper edge of the dimming region 91 and a lower gradient region along the lower edge of the dimming region 91. Therefore, according to the vehicle headlight 1 of the first modification, the distinct visibility of the upper and lower edges of the dimming region 91 can be reduced. The vehicle 100 vibrates in a case of traveling on an uneven road such as a gravel road, and the dimming region 91 also moves in the vertical direction according to the vibration. Therefore, according to the vehicle headlight 1 of the first modification, as compared with a case where the gradient region 92 does not include the pair of regions that are along the upper and lower edges of the dimming region 91, respectively, the movement of the dimming region can be controlled to minimize discomfort when the vehicle 100 travels on the uneven road.

Next, a second modification as the first aspect will be described. FIG. 15 is a diagram illustrating a dimming rate distribution according to the second modification. As illustrated in FIG. 15, a dimming rate distribution 30 of a second modification is different from the dimming rate distribution 30 of the above-described embodiment in that the shape of the dimming section 31 is a trapezoid having an upper base is longer than a lower base, and that the gradient section 32 includes a pair of side gradient sections 32s that are along the left and right edges of the dimming section 31, respectively, an upper gradient section 32u along the upper edge of the dimming section 31, and a lower gradient section 32d along the lower edge of the dimming section 31. Each of the side gradient sections 32s, the upper gradient section 32u, and the lower gradient section 32d has a trapezoidal shape, with one base line being along an edge of the dimming section 31. In addition, the upper gradient section 32u and each side gradient section 32s adjacent to each other share a side, and the lower gradient section 32d and each side gradient section 32s adjacent to each other share a lateral side. Therefore, the gradient section 32 surrounds the dimming section 31 along all the edges of the trapezoidal dimming section 31. In addition, the four gradient sections 32s, 32u, and 32d are trapezoidal. Therefore, in a case where these gradient sections 32s, 32u, and 32d are used as reference gradient sections, it can be understood that the gradient section 32 includes four trapezoidal reference gradient sections each of which has one base line along each of the upper, lower, left, and right edges of the dimming section 31, and the reference gradient sections adjacent to each other share a lateral side. In addition, in the second modification, the width of the upper gradient section 32u and the width of the lower gradient section 32d are the same as each other, the widths of the pair of side gradient sections 32s are the same as each other, and the widths of the upper gradient section 32u and the lower gradient section 32d are narrower than the widths of the side gradient sections 32s. Note that the relationship between the widths of the gradient sections 32s, 32u, and 32d is not limited.

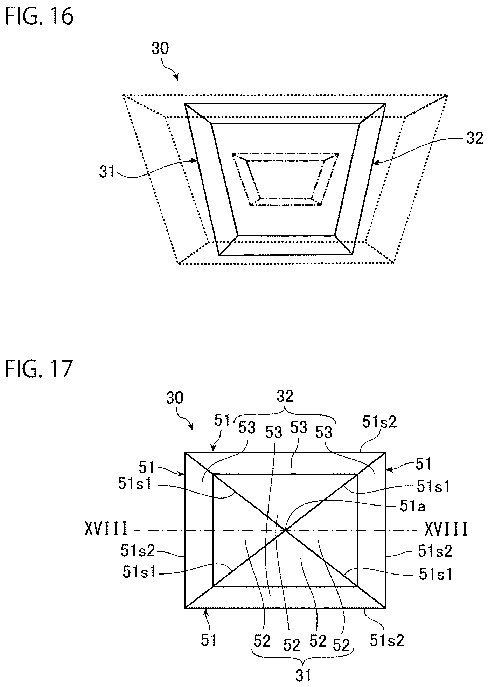

FIG. 16 is a diagram illustrating an example of a modified dimming rate distribution according to the second modification. In FIG. 16, the dimming rate distribution 30 without modification is indicated by solid line, an example of an enlarged dimming rate distribution 30 is indicated by dotted line, and an example of a reduced dimming rate distribution 30 is indicated by one-dot chain line. As illustrated in FIG. 16, in the second modification similar to the first modification, the entire dimming rate distribution 30 is enlarged or reduced in at least one of the vertical direction or the lateral direction. Note that a method of modifying the dimming rate distribution 30 is not limited. For example, the enlargement ratio and reduction ratio of the dimming section 31 may be different from enlargement ratios and reduction ratios of four gradient sections 32s, 32u, and 32d. In addition, the enlargement ratios and reduction ratios of the upper gradient section 32u and lower gradient section 32d may be different from enlargement ratios and reduction ratios of the side gradient sections 32s. Furthermore, as in the above-described embodiment, the widths of the four gradient sections 32s, 32u, and 32d may not change while the dimming section 31 is enlarged or reduced.

Although not illustrated, in the ADB light distribution pattern PA in the second modification, the shape of the dimming region 91 is a trapezoid, the upper base of which is longer than the lower base. In addition, the gradient region 92 includes a pair of side gradient regions that are along the left and right edges of the dimming region 91, respectively, an upper gradient region along the upper edge of the dimming region 91, and a lower gradient region along the lower edge of the dimming region 91. Each of the side gradient regions, the upper gradient region, and the lower gradient region has a trapezoidal shape, with one base line being along an edge of the dimming region. In addition, the upper gradient region and each side gradient region adjacent to each other share a side, and the lower gradient region and each side gradient region adjacent to each other share a lateral side. Therefore, the gradient region 92 surrounds the dimming region 91 along all the edges of the trapezoidal dimming region 91. For example, in a case where the gradient section 32 includes four rectangular reference gradient sections, each having one side along each of the upper, lower, left, and right edges of the dimming section 31, the gradient region is not formed in the vicinity of the apex of the trapezoidal dimming region 91. Therefore, according to the vehicle headlight 1 of the second modification, it can be controlled to minimize uncomfortable for the driver of the vehicle 100 as compared with such a case. Note that, from this viewpoint, the shape of the dimming region 91 may be a quadrangle in addition to a trapezoid. In addition, the shape of the dimming region 91 may be a polygon in addition to a quadrangle. In this case, the gradient section 32 of the dimming rate distribution 30 includes a plurality of trapezoidal reference gradient sections each of which has one base line along each side of the edges of the dimming section 31, and the reference gradient sections adjacent to each other is only sufficient to share the lateral side.

As described above, the visibility section for the driver of the oncoming vehicle or the preceding vehicle, which is the target vehicle, to visually recognize the outside of the vehicle tends to be positioned on the upper side of the oncoming vehicle and the preceding vehicle. In addition, in a case where the dimming region 91 in the ADB light distribution pattern PA is wider, the visibility of the front is reduced. In the vehicle headlight 1 of the second modification, since the shape of the dimming region 91 is a trapezoid, the upper base of which is longer than the lower base, it is easy to allow the dimming region 91 to be superimposed on the visibility section as compared with a case where the shape of the dimming region 91 is a trapezoid, the upper base of which is shorter than the lower base. Therefore, according to the vehicle headlight 1 of the second modification, it is easy to reduce glare to the driver of the oncoming vehicle or the preceding vehicle as compared with the above-described case. Note that, from this viewpoint, the shape of the dimming region 91 is only sufficient to be a trapezoid, the upper base of which is longer than the lower base, and the configuration of the gradient region 92 is not limited. For example, similarly to the above-described embodiment, the gradient section 32 in the dimming rate distribution 30 may include a pair of side gradient sections 32s that are along the left and right edges of the dimming section 31, respectively.

Next, a third modification as the first aspect will be described. FIG. 17 is a diagram illustrating a dimming rate distribution according to the third modification. As illustrated in FIG. 17, in the third modification, a dimming rate distribution 30 includes four triangular reference sections 51 sharing one apex 51a. In addition, the reference sections 51 adjacent to each other share a side 51s1 extending from the apex 51a. In addition, sides 51s2 of two reference sections 51 facing the apex 51a extend in the vertical direction, and sides 51s2 of the other two reference sections 51 facing the apex 51a extend in the lateral direction. The outer shape of the dimming rate distribution 30 is a quadrangle.

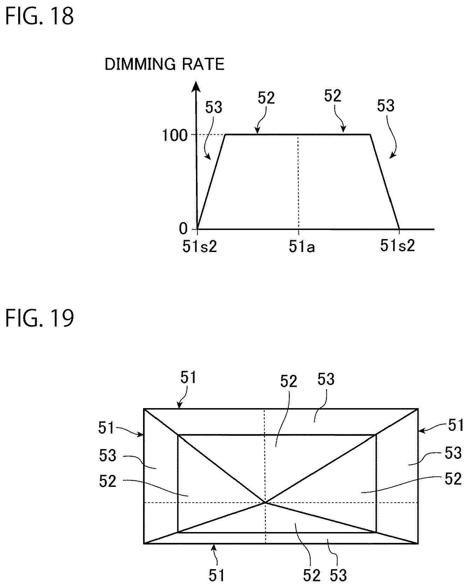

FIG. 18 is a diagram illustrating the dimming rate distribution along line XVIII-XVIII in FIG. 17. As illustrated in FIG. 18, the dimming rate of a tip part 52 that is a part of the reference section 51 including the apex 51a is a predetermined value or more. The dimming rate of a base part 53 that is another part of the reference section 51 is a predetermined value or less, and is decreased from the apex 51a side toward the side 51s2 facing the apex 51a. Edges of the tip parts 52 of the reference sections 51, which are adjacent to each other, are connected to each other on the base part 53 side. Then, a quadrangular dimming section 31 is formed with the tip parts 52 of the four reference sections 51, and a gradient section 32 surrounding the dimming section 31 along all the edges of the dimming section 31 is formed with the base parts 53 of the four reference sections 51. Therefore, the tip part 52 is a part of the dimming section 31, and the base part 53 is a part of the gradient section 32.

In the third modification, in a case of modifying the dimming rate distribution 30, the image generation unit 20 enlarges or reduces the dimming rate distribution for each reference section 51 in at least one of a direction along a perpendicular line that passes through the apex 51a and perpendicularly intersects the side 51s2 facing the apex 51a or a direction perpendicular to the perpendicular line. In this case, the edges of the tip parts 52 of the reference sections 51, which are adjacent to each other, are connected to each other on the base part 53 side. For example, the width of the gradient section 32 can be changed vertically and laterally by changing the enlargement ratio or reduction ratio in the direction perpendicular to the perpendicular line on one side and the other side with respect to the above-described perpendicular line, as illustrated in FIG. 19. Note that FIG. 19 is a diagram illustrating an example of the modified dimming rate distribution in the third modification, and the perpendicular line is indicated by broken line in FIG. 19.

Although not illustrated, in the ADB light distribution pattern PA of the third modification, the shape of the dimming region 91 of the second modification is a quadrangle, and the gradient region 92 surrounds the dimming region 91 along all the edge of the quadrangular dimming region 91.

Note that three or more of reference sections 51 are only sufficient to constitute the dimming rate distribution 30. For example, in a case where three reference sections 51 are used, the shape of the dimming section 31 is a triangle, and the shape of the dimming region 91 in the ADB light distribution pattern PA is a triangle.

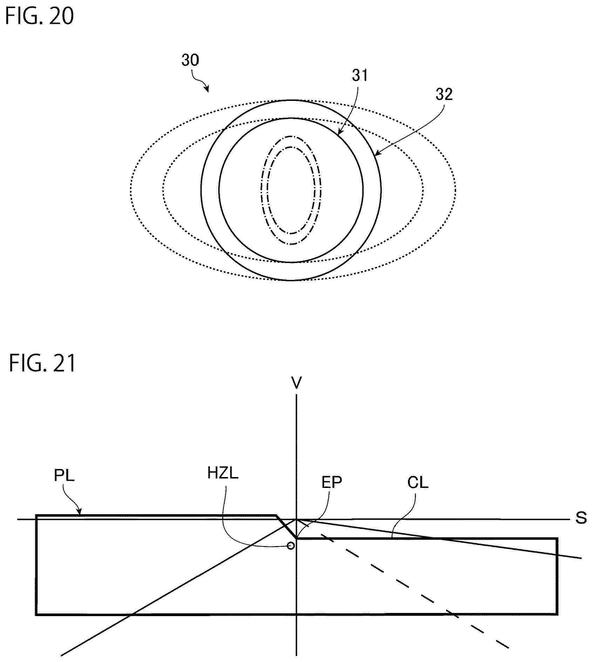

Next, a fourth modification as the first aspect will be described. FIG. 20 is a diagram illustrating a dimming rate distribution according to the fourth modification. In FIG. 20, an example of an enlarged dimming rate distribution 30 is indicated by dotted line, and an example of a reduced dimming rate distribution 30 is indicated by one-dot chain line. As illustrated in FIG. 20, in the fourth modification, the shape of a dimming section 31 is circular, and the gradient section 32 surrounds the dimming section 31 along the entire circumference of the edge of the dimming section 31.

In the fourth modification, in a case of modifying the dimming rate distribution 30, the image generation unit 20 enlarges or reduces the entire dimming rate distribution 30 in at least one direction of the radial directions of the dimming section 31. Therefore, while the shape of the dimming section 31 is made elliptical, it is possible to change the widths of the parts on both sides of this ellipse in the major axis direction in the gradient section 32 and the widths of the parts on both sides of this ellipse in the minor axis direction. Therefore, although not illustrated, the shape of the dimming region 91 of the ADB light distribution pattern PA can be circular or elliptical. In addition, the gradient region 92 surrounds the dimming section 31 along the entire circumference of the edge of such a dimming region 91. Note that, in a case where the shape of the dimming region 91 is an enlarged elliptical shape, the widths of the parts on both sides of this ellipse in the major axis direction in the gradient region 92 is wider than that in a case where the shape of the dimming region 91 is circular.

Note that, although not illustrated, the dimming rate distribution 30 in the fourth modification may be divided into a plurality of fan-shaped reference sections sharing one apex positioned at the center of the dimming section 31. That is, the dimming rate distribution 30 may have a configuration in which the triangular reference sections 51 in the third modification are formed in a fan shape. In this case, in a case of modifying the dimming rate distribution 30, for example, the image generation unit 20 enlarges or reduces the dimming rate distribution in at least one of a direction from the apex toward an arc facing the apex or a direction along the arc for each reference section 51.

In the first embodiment, the memory ME that stores one dimming rate distribution 30 has been described as an example. However, the memory ME may store a plurality of different dimming rate distributions 30 according to the types of the predetermined object. In this case, the dimming rate distribution 30 superimposed on the additional light distribution image 36 as the reference image is changed according to the detected predetermined object.

In addition, in the first embodiment, the reference light distribution pattern is the additional light distribution pattern PAH, and the reference image is the additional light distribution image 36. However, the reference light distribution pattern may be a light distribution pattern of at least a part of the low beam or at least a part of the high beam. For example, the reference light distribution pattern may be the high-beam light distribution pattern PH, and the reference image may be a high-beam image representing the high-beam light distribution pattern PH. In addition, the reference light distribution pattern may be the low-beam light distribution pattern PL, and the reference image may be the low-beam image 35.

Furthermore, in the first embodiment, the light source unit 12 including the plurality of light-emitting elements 13 capable of individually changing the light amount of emitted light has been described as an example. However, the light source unit 12 may include a plurality of light-emitting units capable of individually changing the light amount of emitted light, and may emit light based on the image generated by the image generation unit 20. For example, the light source unit 12 may include a digital mirror device (DMD) including a plurality of reflective elements arranged in a matrix and a light emission unit that emits light to the DMD. The DMD can adjust the light amount of light emitted in a predetermined direction from a reflective surface of each reflective element, and can convert the light emitted in the predetermined direction from each reflective element into light based on an image generated by the image generation unit 20. Therefore, it can be understood that the reflective surface of each reflective element corresponds to the above-described light-emitting unit.

In addition, in the first embodiment, the vehicle 100 that includes the pair of vehicle headlights 1 including the control unit CO and the memory ME has been described as an example. However, the pair of vehicle headlights 1 may share at least one of the control unit CO or the memory ME. In addition, signals output from the light switch 110 and the detection device 120 provided in the vehicle 100 may be input to the control unit CO via no ECU130 of the vehicle 100. Furthermore, a vehicle provided with the vehicle headlights 1, the number of vehicle headlights 1 provided in the vehicle, and the like are not particularly limited. For example, in a case where the vehicle headlights 1 are provided in a train as a vehicle, the number of the vehicle headlights 1 may be one.

### (Second Embodiment)

Next, a second embodiment as a second aspect of the present invention will be described. Note that, the same or equivalent components as those of the first embodiment are denoted by the same reference numerals, and redundant description will not be repeated unless otherwise specified.

An image generation unit 20 of the present embodiment generates an image based on a plurality of images stored in a memory ME. In the present embodiment, signals from the light switch 110 and the detection device 120 are input to the image generation unit 20, and the image generation unit 20 generates an image according to these signals by composing a plurality of images stored in the memory ME. Note that information on the images stored in the memory ME may be read from a memory outside the vehicle via a wireless communication device provided in a vehicle 100.

The images stored in the memory ME of the present embodiment include a low-beam image, a high-beam image as a reference image, a plurality of dimming images, and a plurality of brightening images. These images are grayscale images in which data of each pixel in each image is a gray value, and a pixel having a larger gray value is brighter. However, the data of each pixel is not particularly limited.

The low-beam image is an image in which light emitted from the light source unit 12 forms a low-beam light distribution pattern. The high-beam image is an image in which light emitted from the light source unit 12 forms a high-beam light distribution pattern as a predetermined light distribution pattern. The plurality of dimming images includes images superimposed on a part of the high-beam image as a reference image, and is darker than the brightness of the region where the dimming image is superimposed in the high-beam image. In addition, in each of the plurality of dimming images, at least a part of the region superimposed on the high-beam image is different from each other. The brightening image is an image superimposed on a region corresponding to a region including a high beam hot zone.

The light distribution control unit 40 of the present embodiment controls the power supply circuit 50 on the basis of either the information of the low-beam image stored in the memory ME or the information of the image generated by the image generation unit 20, thereby controlling the lamp unit 10.

Next, the operation of the vehicle headlight 1 of the present embodiment will be described. In the present embodiment, the operations of the pair of vehicle headlights 1 are the same and synchronized with each other. Therefore, hereinbelow, the operation of one vehicle headlight 1 will be described, and the description of the operation of the other vehicle headlight 1 will not be described.

A control flowchart of the control unit CO according to the present embodiment is similar to the control flowchart of the control unit CO according to the first embodiment illustrated in FIG. 6. Therefore, the description will be made with reference to FIG. 6. In addition, since steps SP11 to SP15 according to the present embodiment are similar to steps SP11 to SP15 according to the first embodiment, the description of steps SP11 to SP15 will not be repeated. Note that a light distribution pattern of the emitted low beam in step SP14 is different from the low-beam light distribution pattern in the first embodiment illustrated in FIG. 7. Therefore, first, the low-beam light distribution pattern according to the present embodiment will be described.

FIG. 21 is a diagram illustrating an example of a low-beam light distribution pattern according to the present embodiment, similar to FIG. 7. Similarly to the cutoff line CL according to the first embodiment, a cutoff line CL in the low-beam light distribution pattern PL of the present embodiment includes an elbow point EP positioned below a horizontal line S and on a vertical line V or in the vicinity thereof, and is offset from the horizontal line S. In addition, a hot zone HZL, which is a region having the highest light intensity and the largest light amount in the low-beam light distribution pattern PL, is positioned in the vicinity of the elbow point EP. Then, the light intensity in the low-beam light distribution pattern PL is decreased with increasing distance from the hot zone HZL. That is, the low-beam image is an image representing such a low-beam light distribution pattern PL.

Next, steps SP16 and SP17 according to the present embodiment will be described.

### (Step SP16)

In the present step, the control unit CO controls the lamp unit 10 such that the high beam is emitted from the vehicle headlight 1. Specifically, the image generation unit 20 reads the high-beam image stored in the memory ME, and the light distribution control unit 40 controls the power supply circuit 50 on the basis of the information of the high-beam image to supply electric power to each of the light-emitting elements 13 of the light source unit 12. According to the supply of this electric power, the light source unit 12 emits light based on the high-beam image, and light with the high-beam light distribution pattern is emitted from the vehicle headlight 1. In this way, in a case where the predetermined object is not positioned in front of the vehicle 100, the high beam is emitted from the vehicle headlight 1.

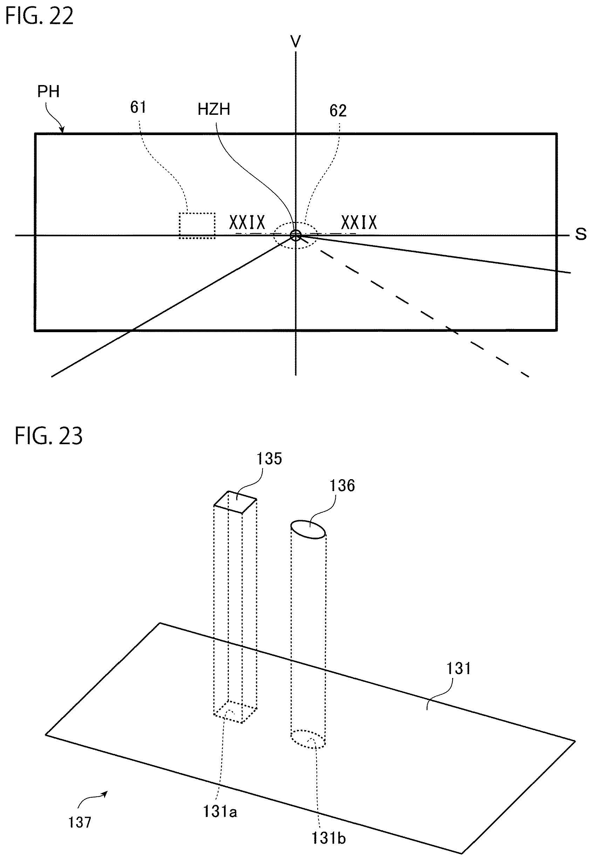

FIG. 22 is a diagram illustrating an example of a high-beam light distribution pattern according to the present embodiment, similar to FIG. 21. As illustrated in FIG. 22, a hot zone HZH, which is a region having the highest light intensity and the largest light amount in the high-beam light distribution pattern PH, is positioned substantially at the center of the high-beam light distribution pattern PH, and the intersection of a vertical line V and a horizontal line S is positioned in the hot zone HZH. Then, the light intensity in the high-beam light distribution pattern PH is decreased with increasing distance from the hot zone HZH. That is, the high-beam image is an image representing such a high-beam light distribution pattern PH. Therefore, in the high-beam image, a region corresponding to the hot zone HZH is the brightest, and the brightness is decreased with increasing distance from the region. In a case where the high beam is emitted from the vehicle headlight 1, the control unit CO returns the control flow to step SP11.

### (Step SP17)

In this step, the control unit CO controls the lamp unit 10 such that the light distribution pattern of the light emitted from the vehicle headlight 1 is an ADB light distribution pattern as a specific light distribution pattern corresponding to the predetermined object. In the high-beam light distribution pattern PH, the ADB light distribution pattern of the present embodiment is a light distribution pattern in which the light amount of a first region superimposed on a predetermined object is reduced, and the light amount of a second region including the hot zone HZH of the high-beam light distribution pattern PH is increased.

First, the image generation unit 20 generates an ADB light distribution image representing the ADB light distribution pattern. FIG. 23 is a diagram for explaining generation of the ADB light distribution image according to the present embodiment. As illustrated in FIG. 23, the image generation unit 20 selects at least one dimming image 135 from a plurality of dimming images 135 on the basis of information of the predetermined object received from the detection device 120, and superimposes the selected dimming image 135 on a part of a high-beam image 131 as a reference image to decrease the brightness of the part of the high-beam image 131. FIG. 23 illustrates an example in which one dimming image 135 is selected. In the present embodiment, a region 131a in the high-beam image 131, where the dimming image 135 is superimposed, becomes the dimming image 135, and the brightness of the region 131a is decreased. In addition, the plurality of dimming images 135 has a constant brightness, and has the brightness with the same predetermined value. In the present embodiment, the predetermined value is 0, but is not limited as long as it is lower than the brightness of the region 131a in the high-beam image 131. Furthermore, although the shape of the plurality of dimming images 135 is a quadrangle, at least one of the area or the aspect ratio differs among the plurality of dimming images 135. However, the brightness in the dimming images 135 may not be constant, and the shape of the dimming images 135 is not limited.

In addition, the image generation unit 20 superimposes the brightening image 136 in which the brightness is changed on a part of the high-beam image 131 on the basis of the information of the predetermined object to increase the brightness of the part of the high-beam image 131. A region 131b in the high-beam image 131, where the brightening image 136 is superimposed, is a region including a region corresponding to the hot zone HZH of the high-beam light distribution pattern PH. In the present embodiment, the region 131b is a region in which the brightness is a predetermined value or more, and the brightness at the edge of the region 131b is the predetermined value. However, the region 131b is not limited as long as it is a region including a region corresponding to the hot zone HZH. In addition, the brightening image 136 is an image representing the region 131b in the high-beam image 131, the brightening image 136, whose overall brightness has been increased by a predetermined magnification, is superimposed on the region 131b, so that the region 131b becomes the brightened brightening image 136, and the brightness of the region 131b increases.

The image generation unit 20 reduces the brightness of the region 131a and increases the brightness of the region 131b in the high-beam image 131 in this manner, to generate an ADB light distribution image 137. The light distribution pattern represented by the ADB light distribution image 137 is an ADB light distribution pattern in which the light amount of the first region corresponding to the region 131a is decreased, and the light amount of the second region corresponding to the region 131b is increased. Note that the method of generating the ADB light distribution image 137 is not limited.

The light distribution control unit 40 controls the power supply circuit 50 on the basis of the information of this ADB light distribution image 137 to supply electric power to each of the light-emitting elements 13 of the light source unit 12. According to the supply of this electric power, the light source unit 12 emits light based on the ADB light distribution image 137, and light with the ADB light distribution pattern is emitted from the vehicle headlight 1. Note that, as described above, the image representing the light distribution pattern of the light emitted toward the front of the vehicle 100 is an image obtained by vertically and laterally inverted from the image representing the light distribution pattern of the light emitted from the light source unit 12. In the present embodiment, the upper right pixels in the ADB light distribution image 137 illustrated in FIG. 23 correspond to the lower right light-emitting elements 13 illustrated in FIG. 3, the lower left pixels in the ADB light distribution image 137 illustrated in FIG. 23 correspond to the upper left light-emitting elements 13 illustrated in FIG. 3, and the correspondence relationship is vertically inverted. Therefore, the ADB light distribution pattern obtained by emitting the light toward the front of the vehicle 100 is a light distribution pattern corresponding to the ADB light distribution image 137 illustrated in FIG. 23. Note that pixels in images in the following drawings correspond to the light-emitting elements 13, similar to the ADB light distribution image 137 illustrated in FIG. 23.

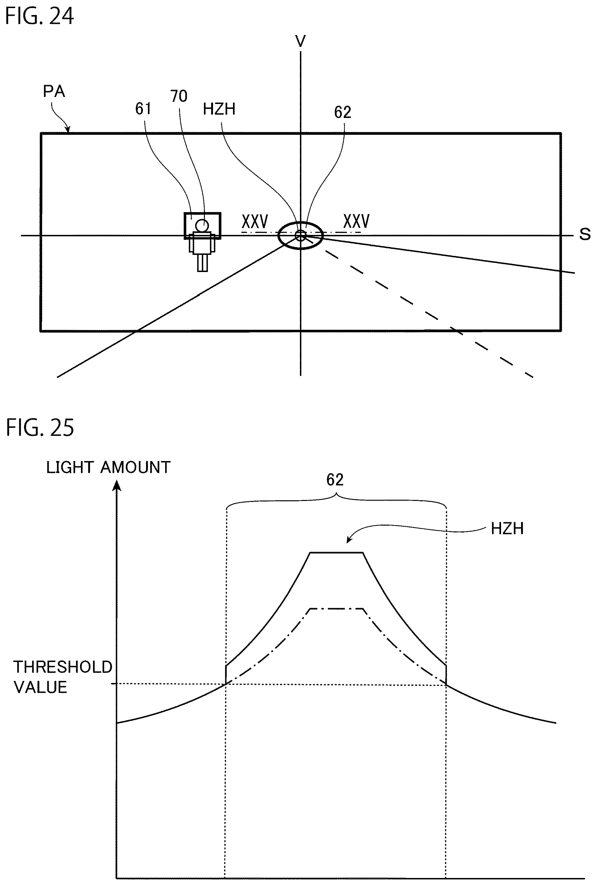

FIG. 24 is a diagram illustrating an example of the ADB light distribution pattern according to the present embodiment, similar to FIG. 22, and is a diagram illustrating the ADB light distribution pattern in a case where a human 70 is positioned as a predetermined object in front of the vehicle 100. The ADB light distribution pattern PA of the present embodiment is a light distribution pattern represented by the ADB light distribution image 137. Therefore, in the ADB light distribution pattern PA, the light amount of a first region 61 corresponding to the region 131a in the high-beam image 131, where the dimming image 135 is superimposed, is less than the light amount of the first region 61 in the high-beam light distribution pattern PH. Note that, in FIG. 22, the first region 61 is indicated by dotted line. As described above, the shape of the dimming image 135 is a quadrangle, and the brightness of the dimming image 135 is 0. Therefore, the first region 61 is a quadrangular light-shielding region that is not irradiated with light. In addition, the first region 61 is superimposed on at least a part of the human 70. That is, the image generation unit 20 of the control unit CO adjusts the selected dimming image 135 or the position at which the selected dimming image 135 is superimposed such that the first region 61 is as described above. Therefore, according to the vehicle headlight 1 of the present embodiment, the amount of light emitted to the human 70 is decreased, and glare to the human 70 can be reduced. In the example illustrated in FIG. 24, the first region 61 is superimposed on the head portion and a part of the upper body of the human 70. However, from the viewpoint of reducing glare to the human 70, the first region 61 is only sufficient to be superimposed on a portion including the head portion of the human 70. For example, the first region 61 may be superimposed on only the head portion of the human 70, and in this way, difficulty in recognizing the human 70 can be minimized.

In addition, in the ADB light distribution pattern PA, the light amount of a second region 62 corresponding to the region 131b in the high-beam image 131, where the brightening image 136 is superimposed, is more than the light amount of the second region 62 in the high-beam light distribution pattern PH. Note that, in FIG. 22, the second region 62 is indicated by dotted line. As described above, the region 131b is a region including a region corresponding to the hot zone HZH of the high-beam light distribution pattern PH. Therefore, the second region 62 is a region including the hot zone HZH of the high-beam light distribution pattern PH.

In addition, in the present embodiment, the second region 62 is a region where the light amount is equal to or more than a threshold value. That is, the region 131b in the high-beam image 131, where the brightening image 136 is superimposed, is set as described above. Note that the second region 62 is only sufficient to include the hot zone HZH of the high-beam light distribution pattern PH, and is not limited.

FIG. 25 is a diagram illustrating a light amount distribution of the ADB light distribution pattern PA along line XXV-XXV in FIG. 24. In FIG. 24, the light amount distribution of the high-beam light distribution pattern PH before the light amount of the second region 62 is increased is indicated by one-dot chain line. As described above, the brightening image 136 is an image representing the region 131b in the high-beam image 131, and the brightening image 136, whose overall brightness has been increased by a predetermined magnification, is superimposed on the region 131b. Therefore, as illustrated in FIG. 25, the brightening amount is increased at a position in the second region 62 of the high-beam light distribution pattern PH as the light amount at the position is greater. That is, the control unit CO controls the light source unit 12 as described above.

In addition, in the present embodiment, the brightening amount in the second region 62 increases as the dimming amount in the first region 61 increases. Specifically, the dimming amount of the first region 61 and the brightening amount of the second region 62 are the same. That is, the image generation unit 20 of the control unit CO adjusts the predetermined magnification such that the dimming amount of the first region 61 and the brightening amount of the second region 62 are the same.

Note that, although not illustrated, in the present embodiment, in a case where there is a plurality of predetermined objects detected by the detection device 120, the first region 61 is provided for each predetermined object. In addition, the total dimming amount of the first regions 61 and the brightening amount of the second region 62 are the same.

In a case where the light with the ADB light distribution pattern PA is emitted from the vehicle headlight 1 as described above, the control unit CO returns the control flow to step SP11.

Next, a change in a light distribution pattern in a case where emission of a high beam is selected by the light switch 110 will be described. First, a change in a light distribution pattern from a state in which a predetermined object is not positioned in front of the vehicle 100 to the predetermined object is positioned in front of the vehicle 100, that is, a change from the high-beam light distribution pattern PH to the ADB light distribution pattern PA will be described. Hereinafter, a case where the light distribution pattern changes from the high-beam light distribution pattern PH illustrated in FIG. 22 to the ADB light distribution pattern PA illustrated in FIG. 24 will be described as an example.

In this case, the control unit CO controls the lamp unit 10 such that, in the high-beam light distribution pattern PH, the light amount of the first region 61 superimposed on at least a part of the human 70 is decreased, and the light amount of the second region 62 including the hot zone HZH is increased to reach a predetermined amount with the elapse of time. Specifically, the light distribution control unit 40 controls the power supply circuit 50 to change electric power supplied to each of the light-emitting elements 13 of the light source unit 12, as described above. This predetermined amount is the light amount of the second region 62 in the ADB light distribution pattern PA, and when the light amount of the second region 62 reaches a predetermined amount, the high-beam light distribution pattern PH changes to the ADB light distribution pattern PA.

In the present embodiment, the light amount is increased in the entire second region 62 with the elapse of time. Therefore, the entire second region 62 gradually becomes brighter with the elapse of time.

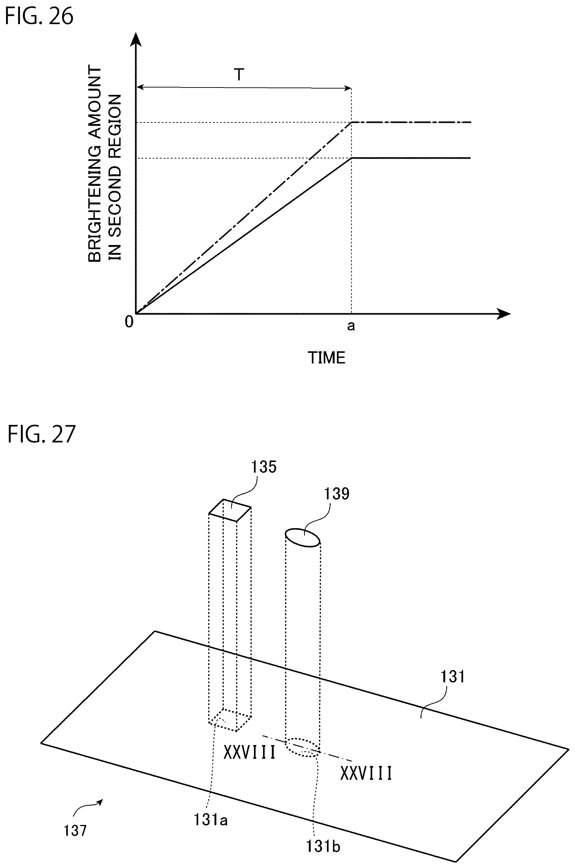

FIG. 26 is a graph illustrating an example of a temporal variation in the brightening amount in the second region 62, and is a graph illustrating an example of a temporal variation in the brightening amount in the second region 62 on the basis of the time at which the increase in the light amount is started. A change indicated by solid line in FIG. 26 is the temporal variation in the brightening amount in the second region 62 illustrated in FIG. 24, the light amount of the second region 62 increases with the elapse of time, the light amount of the second region 62 reaches a predetermined amount at a time a, and the brightening of the second region 62 stops. Therefore, according to the vehicle headlight 1 of the present embodiment, it can be controlled to minimize uncomfortable for the driver due to the brightening of the second region 62 as compared with a case where the light amount in the second region 62 instantaneously reaches the predetermined amount.

In the present embodiment, as illustrated in FIG. 26, the light amount increased per unit time is constant in the second region 62 regardless of the elapse of time. In addition, a period T until the light amount of the second region 62 reaches the predetermined amount is constant regardless of the brightening amount of the second region 62. Therefore, for example, in a case where the light amount of the second region 62 is increased to another predetermined amount more than the predetermined amount, the temporal variation of the brightening amount of the second region 62 is as indicated by one-dot chain line in FIG. 26, and the light amount increased per unit time increases. However, the period T until the light amount of the second region 62 reaches the predetermined amount may vary according to the brightening amount of the second region 62.

Note that, although not illustrated, in the present embodiment, in a case where a state in which the human 70 as a predetermined object is positioned in front of the vehicle 100 is changed to a state in which another predetermined object in addition to the human 70 is positioned in front of the vehicle 100, the control unit CO controls the lamp unit 10 as follows. In the ADB light distribution pattern PA in which the first region 61 and the second region 62 are provided for the human 70, the control unit CO controls the lamp unit 10 such that the light amount of another first region 61 superimposed on at least a part of another predetermined object is decreased, and the light amount of the second region 62 is increased with the elapse of time to reach another predetermined amount.

Next, a change in the light distribution pattern in a case where the predetermined object positioned in front of the vehicle 100 is no longer positioned in front of the vehicle 100 will be described. Hereinafter, a case where the human 70 illustrated in FIG. 24 is no longer positioned in front of the vehicle 100, the light distribution pattern changes from the ADB light distribution pattern PA illustrated in FIG. 24 to the high-beam light distribution pattern PH illustrated in FIG. 22 will be described as an example.

In this case, the control unit CO controls the lamp unit 10 such that the light amount of the first region 61 is increased with the elapse of time and returns to the light amount of the first region 61 in the high-beam light distribution pattern PH, and the light amount of the second region 62 is decreased with the elapse of time and returns to the light amount of the second region 62 in the high-beam light distribution pattern PH. Therefore, according to the vehicle headlight 1 of the present embodiment, it can be controlled to minimize uncomfortable for the driver due to the changes in the light amounts of the first region 61 and the second region 62 as compared with the case where the light amount of each of the first region 61 and the second region 62 instantaneously returns to the light amount in the high-beam light distribution pattern PH.

Note that the light amount of each of the first region 61 and the second region 62 is only sufficient to return to the light amount in the high-beam light distribution pattern PH, and for example, each light amount may also instantaneously return to the light amount in the high-beam light distribution pattern PH.

In addition, in the present embodiment, the timing at which the light amount of the first region 61 returns to the light amount of the first region 61 in the high-beam light distribution pattern PH is the same as the timing at which the light amount of the second region 62 returns to the light amount of the second region 62 in the high-beam light distribution pattern PH. That is, the control unit CO controls the lamp unit 10, as described above. However, these timings may be different from each other.

In addition, the period until the light amount of each of the first region 61 and the second region 62 returns to the light amount in the high-beam light distribution pattern PH is not limited, and may be constant, and may be longer as the brightening amount of the second region 62 is increased.

In this way, in the vehicle headlight 1 of the present embodiment, in a case where the emission of the high beam is selected by the light switch 110, the light distribution pattern of the emitted light changes according to the predetermined object positioned in front of the vehicle 100.

Incidentally, in the vehicle headlight, there is a demand for further increasing the brightness of the hot zone. However, in a case where the brightness of the hot zone is increased, the upper limit of the power consumption may be reached.

Accordingly, the vehicle headlight 1 of the present embodiment includes the light source unit 12 and the control unit CO that receives a signal from the detection device 120 and controls the light source unit 12. The light source unit 12 includes the plurality of light-emitting elements 13 as the light-emitting units emitting light by electric power and capable of individually changing the light amount of light to be emitted, and the plurality of light-emitting elements 13 has the arrangement in a matrix. This light source unit 12 emits light with a light distribution pattern according to the light amount of light emitted from the plurality of light-emitting elements 13. The control unit CO controls the light source unit 12 such that, in the high-beam light distribution pattern PH as the predetermined light distribution pattern, the light amount of the first region 61 superimposed on at least a part of the human 70 is decreased, and the light amount of the second region 62 including the hot zone HZH of the high-beam light distribution pattern PH is increased.

In the vehicle headlight 1 of the present embodiment, in a case where the human 70 is positioned in front of the vehicle 100, the light amount of the first region 61 superimposed on at least a part of the human 70 in the high-beam light distribution pattern PH is decreased. Therefore, according to the vehicle headlight 1 of the present embodiment, as described above, the amount of light emitted to the human 70 is decreased, and glare to the human 70 can be reduced. Since the light amount of the first region 61 is decreased as described above, the power consumption is reduced, and surplus power is generated. In the vehicle headlight 1 of the present embodiment, in a case where surplus power is generated as described above, the light amount of the second region 62 including the hot zone HZH is increased. Therefore, according to the vehicle headlight 1 of the present embodiment, it is possible to improve the visibility of the region including the hot zone HZH by effectively utilizing electric power without reaching the upper limit of the power consumption.

In addition, in the vehicle headlight 1 of the present embodiment, the control unit CO controls the light source unit 12 such that the dimming amount of the first region 61 and the brightening amount of the second region 62 are the same as each other. Therefore, according to the vehicle headlight 1 of the present embodiment, it is possible to improve the visibility of the region including the hot zone without increasing the power consumption.

Note that the dimming amount of the first region 61 and the brightening amount of the second region 62 may be different from each other. However, the control unit CO preferably controls the light source unit 12 such that the brightening amount of the second region 62 is increased as the dimming amount of the first region 61 is increased. The power consumption is decreased as the dimming amount of the first region 61 is increased, and the second region 62 is brightened as the brightening amount of the second region 62 is increased, so that the visibility of the second region 62 tends to be improved. Therefore, according to such a configuration, the visibility of the region including the hot zone HZH can be further improved while an increase in power consumption is suppressed.

In addition, in the present embodiment, the case where the first region 61 is superimposed on at least a part of the human 70 as a predetermined object has been described as an example. However, for example, in a case where the first region is superimposed on at least a part of a target vehicle as a predetermined object, the amount of light emitted to the target vehicle can be decreased to reduce glare to the driver of the target vehicle. In this case, it is only sufficient that the first region is superimposed on at least a part of a visibility section for the driver of the target vehicle to visually recognize the outside of the vehicle. For example, the first region may be superimposed on the entire target vehicle. Note that the visibility section is, for example, the windshield in a case where the target vehicle is an oncoming vehicle, and is, for example, a side mirror, a rear window, an imaging device that images the rear of the vehicle, or the like in a case where the target vehicle is a preceding vehicle, and these generally tend to be disposed above the license plate. Furthermore, in a case where the first region is superimposed on at least a part of a retroreflective object as the predetermined object, the amount of light emitted to the retroreflective object is decreased. Therefore, the amount of reflected light returning to the vehicle 100 after being reflected by the retroreflective object, and glare to the driver of the vehicle 100 due to the reflected light can be reduced.

In addition, in the vehicle headlight 1 of the present embodiment, the control unit CO controls the light source unit 12 such that the brightening amount is increased at a position in the second region 62 of the high-beam light distribution pattern PH as the light amount at the position is greater. Therefore, according to the vehicle headlight 1 of the present embodiment, it can be controlled to minimize uncomfortable for the driver due to the brightening of the second region 62 as compared with a case where the brightening amount at any position in the second region 62 is constant.

In addition, the vehicle headlight 1 of the present embodiment further includes the memory ME. The memory ME stores the high-beam image 131 as a reference image, the plurality of dimming images 135, and the brightening image 136. The high-beam image 131 is an image representing the high-beam light distribution pattern PH as a predetermined light distribution pattern. The plurality of dimming images includes images that are superimposed on a part of the high-beam image 131, different from each other in at least a part of a region superimposed on the high-beam image 131, and darker than the brightness of the region in the high-beam image 131. The brightening image 136 is an image superimposed on the region 131b corresponding to the second region 62 in the high-beam image 131. The control unit CO includes the image generation unit 20 and the light distribution control unit 40. The image generation unit 20 superimposes at least one dimming image 135 among the plurality of dimming images 135 on a part of the high-beam image 131 to reduce the brightness of the region 131a corresponding to the first region 61 in the high-beam image 131. In addition, the image generation unit 20 superimposes the brightening image 136 in which the brightness is changed on a part of the high-beam image 131 to increase the brightness of the region 131b corresponding to the second region 62 in the high-beam image 131. In this way, the image generation unit 20 generates the ADB light distribution image 137 representing the ADB light distribution pattern PA, which is a specific light distribution pattern in which the light amount of the first region 61 is decreased, and the light amount of the second region 62 is increased, in the high-beam light distribution pattern PH. The light distribution control unit 40 controls the light source unit 12 on the basis of the ADB light distribution image 137 to cause the light source unit 12 to emit light with the ADB light distribution pattern PA. Then, in the vehicle headlight 1 of the present embodiment, the brightening image 136 is an image representing the region 131b corresponding to the second region 62 in the high-beam image 131. Therefore, according to the vehicle headlight 1 of the present embodiment, as described above, the brightening amount can be increased at a position in the second region 62 as the light amount at the position is greater.

Note that the brightening image 136 is not limited as long as it is an image in which the brightness of the region 131b corresponding to the second region 62 in the high-beam image 131 can be increased by the image generation unit 20. For example, the brightness in the brightening image 136 may be constant. That is, the brightness of all the pixels constituting the brightening image 136 may be constant. In this case, the image generation unit 20 adds, to the brightness at any position of the region 131b, the brightness of the brightening image 136 at the position. In this way, the brightening amount at any position in the second region 62 can be made constant.

### (Third Embodiment)

Next, a third embodiment as the second aspect of the present invention will be described in detail. Note that, the same or equivalent components as those of the second embodiment are denoted by the same reference numerals, and redundant description will not be repeated unless otherwise specified.

In the present embodiment, the method of increasing the brightness in the second region 62 is different from the method of increasing the brightness in the second embodiment. The ADB light distribution pattern PA according to the present embodiment is the same as the ADB light distribution pattern PA in the second embodiment, except for the light amount distribution in the second region 62. Hereinafter, a case where the ADB light distribution pattern PA illustrated in FIG. 24 is emitted will be described as an example.

In the present embodiment, the memory ME stores a brightening rate distribution instead of the brightening image 136. The brightening rate in the brightening rate distribution is a rate at which the brightness of an image is increased. The higher the brightening rate, the higher the brightness, and the brightness does not change in a case where the brightening rate is 0%. The information on the brightening rate distribution of the present embodiment is data of an image in which the data of each pixel represents a brightening rate, but is not limited thereto.

FIG. 27 is a diagram for explaining generation of the ADB light distribution image 137 according to the present embodiment. The image generation unit 20 of the present embodiment generates the high-beam image 131, the plurality of dimming images 135, and the ADB light distribution image 137 on the basis of the brightening rate distribution 139. Specifically, as illustrated in FIG. 27, the image generation unit 20 superimposes at least one dimming image 135 that is selected on the basis of information of the predetermined object received from the detection device 120 on a part of the high-beam image 131 to decrease the brightness of the region 131a corresponding to the first region 61 in the high-beam image 131, similar to the second embodiment. Furthermore, instead of the brightening image 136, the image generation unit 20 changes the entire brightening rate distribution 139 by a predetermined magnification on the basis of the information of the predetermined object, and superimposes the brightening rate distribution 139 changed by the predetermined magnification on a part of the high-beam image 131 to increase the brightness of the region 131b corresponding to the second region 62 in the high-beam image 131. In this way, the image generation unit 20 generates the ADB light distribution image 137. The ADB light distribution image 137 thus generated is the same as the ADB light distribution image 137 of the second embodiment, except for the region 131b that is a region corresponding to the second region 62.

Similarly to the second embodiment, the light distribution control unit 40 controls the light source unit 12 on the basis of the generated ADB light distribution image 137, and causes the light source unit 12 to emit light with the ADB light distribution pattern PA in which the light amount of the first region 61 is decreased and the light amount of the second region 62 is increased in the high-beam light distribution pattern PH. Therefore, the light with the ADB light distribution pattern PA is emitted from the vehicle headlight 1.

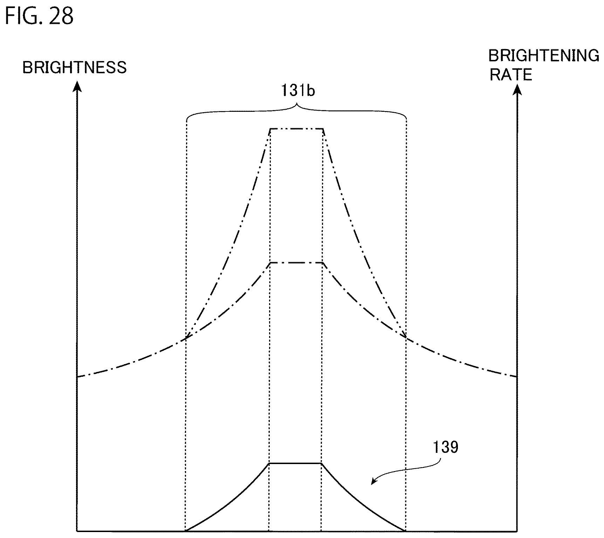

FIG. 28 is a diagram illustrating a relationship between the brightening rate distribution of the present embodiment and the distribution of the brightness of the high-beam image 131, and is a diagram illustrating the brightening rate distribution 139 and the distribution of the brightness of the high-beam image 131 along line XXVIII-XXVIII of FIG. 27. In FIG. 28, the brightening rate distribution is indicated by solid line, and the distribution of the brightness of the high-beam image 131 is indicated by one-dot chain line. Note that, in FIG. 28, the distribution of the brightness of the high-beam image 131 when brightened by the brightening rate distribution 139 is indicated by two-dot chain line. As illustrated in FIG. 28, in the present embodiment, at a position where the brightness is increased in the region corresponding to the second region 62 in the high-beam image 131, the brightening rate of the brightening rate distribution 139 at the position is increased, and the distribution of the brightness of the high-beam image 131 indicated by one-dot chain line is the distribution of the brightness indicated by two-dot chain line. Therefore, the brightening rate can be increased at the position in the second region 62 as the light amount at the position is greater. That is, the control unit CO controls the light source unit 12 such that the brightening rate is increased at a position in the second region 62 as the light amount at the position is greater, and the distribution of the light amount of the second region 62 is a distribution corresponding to the distribution of the brightness indicated by two-dot chain line in FIG. 28. Therefore, according to the vehicle headlight 1 of the present embodiment, it can be controlled to minimize uncomfortable for the driver due to the brightening of the second region 62 as compared with a case where the brightening rate at any position in the second region 62 is constant.

In addition, in the present embodiment, the brightening rate at the outer edge of the brightening rate distribution 139 is 0%. Therefore, the noticeability of the outer edge of the second region 62 in the ADB light distribution pattern PA can be minimized. Note that the brightening rate at the outer edge of the brightening rate distribution 139 may be more than 0%.

### (Fourth Embodiment)

Next, a fourth embodiment as the second aspect of the present invention will be described in detail. Note that, the same or equivalent components as those of the second embodiment are denoted by the same reference numerals, and redundant description will not be repeated unless otherwise specified.

In the present embodiment, the method of increasing the brightness in the second region 62 is different from the method of increasing the brightness in the second embodiment. The ADB light distribution pattern PA according to the present embodiment is the same as the ADB light distribution pattern PA in the first embodiment, except for the light amount distribution in the second region 62. Hereinafter, a case where the ADB light distribution pattern PA illustrated in FIG. 24 is emitted will be described as an example.

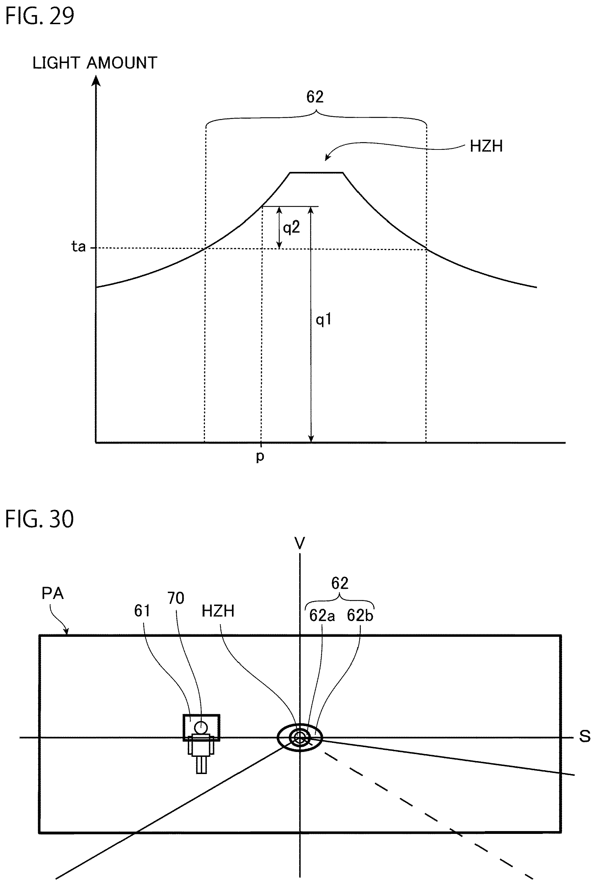

FIG. 29 is a diagram illustrating a light amount distribution of the high-beam light distribution pattern PH along line XXIX-XXIX in FIG. 22. As illustrated in FIG. 29, the second region 62 of the present embodiment is a region in which the light amount is equal to or more than a threshold value ta, similar to the second embodiment. Then, the control unit CO controls the light source unit 12 so that the brightening amount at any position p in the second region 62 reaches a value obtained by increasing a light amount q2 obtained by subtracting the threshold value ta from a light amount q1 at the any position p by a predetermined magnification. In the present embodiment, the light amount at the outer edge of the second region 62 reaches the threshold value ta. Therefore, according to the vehicle headlight 1 of the present embodiment, the brightening amount at the outer edge of the second region 62 is zero, and the noticeability of the boundary of the second region 62 can be minimized as compared with a case where the light amount at the any position p is increased by a predetermined magnification.

Note that, in the present embodiment, in the region 131b of the high-beam image 131, the image generation unit 20 causes the increase amount of the brightness at an arbitrary position to be a value obtained by increasing the brightness obtained by subtracting the brightness corresponding to the threshold value ta from the brightness at the arbitrary position at a predetermined magnification.

In addition, in the present embodiment, the predetermined magnification is constant regardless of the position. Therefore, according to the vehicle headlight 1 of the present embodiment, the control load of the control unit CO can be reduced. Note that the predetermined magnification may be increased as the light amount obtained by subtracting the threshold value ta from the light amount at the any position p is increased. With such a configuration, it can be controlled to minimize uncomfortable for the driver due to the brightening of the second region 62.

Although the second aspect of the present invention has been described with the second to fourth embodiments as examples, the present invention is not limited thereto.

For example, in the second to fourth embodiments, the predetermined light distribution pattern is the high-beam light distribution pattern PH, and the reference image is the high-beam image 131. However, the predetermined light distribution pattern is not limited, and for example, may be the low-beam light distribution pattern PL, and the reference image may be the low-beam image. In addition, the predetermined light distribution pattern may be the additional light distribution pattern that is, when added to the low-beam light distribution pattern PL, the high-beam light distribution pattern, and the reference image may be an image representing the additional light distribution pattern.

In addition, the memory ME may store a plurality of reference images respectively representing a plurality of predetermined light distribution patterns that are different from each other. Such a plurality of predetermined light distribution patterns includes, for example, a light distribution pattern in which the position of the hot zone HZH is moved in at least one of the vertical direction or the lateral direction in the high-beam light distribution pattern PH illustrated in FIG. 22. Then, the control unit CO may select one reference image from the plurality of reference images on the basis of information received from a sensor (not illustrated) that detects a steering angle of the vehicle 100 or a sensor (not illustrated) that detects an inclination in the front-rear direction of the vehicle 100. In this case, information on the position corresponding to the hot zone HZH in each reference image may be stored in the memory ME in advance, and the control unit CO may superimpose the brightening image 136 or the brightening rate distribution 139 on the reference image on the basis of the information. In addition, the control unit CO may search for the position corresponding to the hot zone HZH in the reference image, and superimpose the brightening image 136 or the brightening rate distribution 139 on the reference image on the basis of the searched position. Note that the search method is not limited, and for example, the center of gravity in a region brighter than the reference value may be set to the position corresponding to the hot zone HZH.

In addition, in the second to fourth embodiments, the vehicle 100 that includes the pair of vehicle headlights 1 including the control unit CO and the memory ME has been described as an example. However, the pair of vehicle headlights 1 may share at least one of the control unit CO or the memory ME. In addition, signals output from the light switch 110 and the detection device 120 provided in the vehicle 100 may be input to the control unit CO via no ECU130 of the vehicle 100. Furthermore, a vehicle provided with the vehicle headlights 1, the number of vehicle headlights 1 provided in the vehicle, and the like are not particularly limited. For example, in a case where the vehicle is a two-wheeled vehicle, the number of vehicle headlights 1 may be one.

In addition, in the second to fourth embodiments, the control unit CO including the image generation unit 20 that generates the ADB light distribution image has been described as an example. However, the control unit CO may not include the image generation unit 20. In this case, for example, the plurality of ADB light distribution images respectively representing the plurality of ADB light distribution patterns that are different from each other according to the predetermined object is stored in the memory ME in advance. Then, the control unit CO may select one ADB light distribution image from the plurality of ADB light distribution images on the basis of the information on the predetermined object received from the detection device 120, and may control the power supply circuit 50 on the basis of the selected ADB light distribution image.

In the second to fourth embodiments, the size of the second region 62 was constant regardless of the dimming amount of the first region **61.** However, the control unit CO may control the light source unit 12 such that the second region 62 is wider as the dimming amount of the first region 61 is increased. With such a configuration, excessive brightening of the second region 62 can be controlled, and it can be controlled to minimize uncomfortable for the driver due to the brightening of the second region **62.** In addition, the control unit CO may control the light source unit 12 such that the brightening amount of the second region 62 per unit area is increased as the dimming amount of the first region 61 is increased. With such a configuration, excessive enlargement of the second region 62 can be controlled, and it can be controlled to minimize uncomfortable for the driver due to the brightening of the second region **62.** In addition, the control unit CO may control the light source unit 12 such that the light amount at the position where the light amount in the second region 62 is maximum does not exceed the specific value. According to such a configuration, it is possible to prevent the formation of an excessively bright region in the second region **62.** In this case, for example, as illustrated in FIG. 30, the second region 62 may include a specific region 62a in which the light amount at any position including the hot zone HZH is a specific value, and a surrounding region 62b surrounding the specific region 62a, where the light amount is decreased as the distance increases from the specific region 62a. In this case, the specific region 62a is a hot zone.

According to the first aspect of the present invention, the vehicle headlight capable of controlling the movement of a darkened region to minimize discomfort for the driver while suppressing an increase in the information amount is provided, and according to the second aspect of the present invention, the vehicle headlight capable of improving visibility of the region including the hot zone by effectively utilizing electric power is provided, which can be used in the field of automobiles and the like.

## Claims

1. A vehicle headlight comprising:
an image generation unit that receives a signal from a detection device detecting a predetermined object positioned in front of a vehicle, and generates an image representing a light distribution pattern including a reference light distribution pattern that is a light distribution pattern including at least a part of a low beam or at least a part of a high beam;
a light source unit that includes a plurality of light-emitting units capable of individually changing a light amount of light to be emitted and having an arrangement in a matrix, and that emits light on a basis of the image generated by the image generation unit; and
a memory that stores a reference image in which the light emitted from the light source unit forms the reference light distribution pattern, and a dimming rate distribution that is a dimming rate distribution superimposed on a part of the reference image and decreasing a brightness of the part, wherein
the dimming rate distribution includes a dimming section that has a dimming rate of a predetermined value or more and a gradient section that is along at least a part of an edge of the dimming section and has a dimming rate of the predetermined value or less, the dimming rate decreasing from a dimming section side toward an opposite side to the dimming section, and
the image generation unit enlarges or reduces at least a part of the dimming rate distribution while maintaining a state in which the gradient section is along the edge of the dimming section, superimposes the dimming rate distribution on a part of the reference image to decrease the brightness of the part of the reference image, and generates the image in which the light emitted from the light source unit forms a specific light distribution pattern in which a dimming region corresponding to the dimming section, superimposed on the predetermined object, and having a decreased light amount, and a gradient region corresponding to the gradient section, where a light amount is decreased along an edge of the dimming region, are formed in the reference light distribution pattern.

2. The vehicle headlight according to claim 1, wherein
a shape of the dimming section is a quadrangle, and
the gradient section includes a pair of side gradient sections that are along left and right edges of the dimming section, respectively.

3. The vehicle headlight according to claim 1, wherein
a shape of the dimming section is a quadrangle, and
the gradient section includes an upper gradient section that is along an upper edge of the dimming section and a lower gradient section that is along a lower edge of the dimming section.

4. The vehicle headlight according to claim 1, wherein
a shape of the dimming section is a polygon,
the gradient section includes a plurality of trapezoidal reference gradient sections, each having one base line along each side of edges of the dimming section, and
the reference gradient sections adjacent to each other share a lateral side.

5. The vehicle headlight according to any one of claims 1 to 4, wherein
a shape of the dimming section is a trapezoid, an upper base of which is longer than a lower base.

6. The vehicle headlight according to claim 1, wherein
the dimming rate distribution includes three or more triangular reference sections that share one apex,
the reference sections adjacent to each other share a side extending from the apex, and
a part of each reference section, which includes the apex, is a part of the dimming section, and another part of each reference section is a part of the gradient section.

7. The vehicle headlight according to claim 1, wherein
a shape of the dimming section is circular, and
the gradient section is along an entire circumference of an edge of the dimming section.

8. A vehicle headlight comprising:
a light source unit that includes a plurality of light-emitting units emitting light by electric power, capable of individually changing a light amount of light to be emitted, and having an arrangement in a matrix, and that emits light with a light distribution pattern corresponding to a light amount of light emitted from the plurality of light-emitting units; and
a control unit that receives a signal from a detection device detecting a predetermined object positioned in front of a vehicle and that controls the light source unit, wherein
the control unit controls the light source unit such that, in a predetermined light distribution pattern, a light amount of a first region superimposed on at least a part of the predetermined object is decreased, and a light amount of a second region including a hot zone of the predetermined light distribution pattern is increased.

9. The vehicle headlight according to claim 8, wherein
the control unit controls the light source unit such that the light amount of the second region is increased with an elapse of time to reach a predetermined amount.

10. The vehicle headlight according to claim 8, wherein
the control unit controls the light source unit such that a brightening amount is increased at a position where the light amount in the second region is increased.
The vehicle headlight according to claim 8, wherein
the control unit controls the light source unit such that a brightening amount is increased at a position in the second region as the light amount at the position is greater.

11. The vehicle headlight according to claim 8, wherein
the control unit controls the light source unit such that a brightening rate is increased at a position in the second region as the light amount at the position is greater.

12. The vehicle headlight according to claim 8, wherein
the second region is a region in which a light amount is a threshold value or more, and
the control unit controls the light source unit such that a brightening amount at any position in the second region is a value obtained by subtracting the threshold value from a light amount at the any position and increasing the light amount by a predetermined magnification.

13. The vehicle headlight according to claim 12, wherein
the predetermined magnification is constant.

14. The vehicle headlight according to claim 12, wherein
the predetermined magnification is higher as the light amount obtained by subtracting the threshold value from the light amount at the any position is increased.

15. The vehicle headlight according to claim 8, wherein
the control unit controls the light source unit such that a brightening amount of the second region is increased as a dimming amount of the first region is increased.

16. The vehicle headlight according to claim 15, wherein
the control unit controls the light source unit such that the second region is wider as a dimming amount of the first region is increased.

17. The vehicle headlight according to claim 15, wherein
the control unit controls the light source unit such that a brightening amount of the second region per unit area is increased as a dimming amount of the first region is increased.

18. The vehicle headlight according to claim 15, wherein
the control unit controls the light source unit such that a light amount at a position where the light amount in the second region is maximum does not exceed a specific value.

19. The vehicle headlight according to any one of claims 8 to 18, wherein
the control unit controls the light source unit such that a dimming amount of the first region and a brightening amount of the second region are the same as each other.

20. The vehicle headlight according to claim 8, further comprising a memory that stores a reference image representing the predetermined light distribution pattern, a plurality of dimming images that is superimposed on a part of the reference image, differs in at least a part of a region superimposed on the reference image, and is darker than a brightness of the region in the reference image, and a brightening image superimposed on a region corresponding to the second region in the reference image, wherein
the control unit includes an image generation unit and a light distribution control unit,
the image generation unit superimposes at least one dimming image of the plurality of dimming images on a part of the reference image to decrease a brightness of a region corresponding to the first region in the reference image, superimposes the brightening image in which a brightness is changed on the reference image to increase a brightness of a region corresponding to the second region in the reference image, and generates an image representing a specific light distribution pattern in which the light amount of the first region is decreased and the light amount of the second region is increased in the predetermined light distribution pattern, and
the light distribution control unit controls the light source unit on a basis of the image to cause the light source unit to emit light with the specific light distribution pattern.

21. The vehicle headlight according to claim 20, wherein
the brightening image is an image representing a region corresponding to the second region in the reference image.

22. The vehicle headlight according to claim 8, further comprising a memory that stores a reference image representing the predetermined light distribution pattern, a plurality of dimming images that is superimposed on a part of the reference image, differs in at least a part of a region superimposed on the reference image, and is darker than a brightness of the region in the reference image, and a brightening rate distribution superimposed on a region corresponding to the second region in the reference image, the brightening rate distribution being a brightening rate for increasing a brightness of the region, wherein
the control unit includes an image generation unit and a light distribution control unit,
the image generation unit superimposes at least one dimming image of the plurality of dimming images on a part of the reference image to decrease a brightness of a region corresponding to the first region in the reference image, superimposes the brightening rate distribution in which a brightening rate is changed by a predetermined magnification on a part of the reference image to increase a brightness of a region corresponding to the second region in the reference image, and generates an image representing a specific light distribution pattern in which the light amount of the first region is decreased and the light amount of the second region is increased in the predetermined light distribution pattern, and
the light distribution control unit controls the light source unit on a basis of the image to cause the light source unit to emit light with the specific light distribution pattern.

23. The vehicle headlight according to claim 22, wherein
at a position where a brightness is increased in the region corresponding to the second region in the reference image, the brightening rate of the brightening rate distribution at the position is increased.
